(19) Europäisches Patentamt
European Patent Office
Office européen des brevets

(11) **EP 4 295 196 B1**

(12) **EUROPEAN PATENT SPECIFICATION**

(45) Date of publication and mention
of the grant of the patent:
**15.05.2024 Bulletin 2024/20**

(21) Application number: **22706323.7**

(22) Date of filing: **17.02.2022**

(51) International Patent Classification (IPC):
***G02C 7/02*** *(2006.01)* ***G02B 1/111*** *(2015.01)*

(52) Cooperative Patent Classification (CPC):
**G02C 7/02; G02B 1/111**

(86) International application number:
**PCT/EP2022/054003**

(87) International publication number:
**WO 2022/175412 (25.08.2022 Gazette 2022/34)**

(54) **COATED LENS BASED ON A LENS SUBSTRATE COMPRISING DIFFERENT OPTICAL MATERIALS OR A SINGLE OPTICAL MATERIAL**

BESCHICHTETE LINSE BASIEREND AUF EINEM LINSENSUBSTRAT MIT VERSCHIEDENEN OPTISCHEN MATERIALIEN ODER EINEM EINZIGEN OPTISCHEN MATERIAL

LENTILLE REVÊTUE BASÉE SUR UN SUBSTRAT DE LENTILLE COMPRENANT DIFFÉRENTS MATÉRIAUX OPTIQUES OU UN SEUL MATÉRIAU OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.02.2021 EP 21158001**

(43) Date of publication of application:
**27.12.2023 Bulletin 2023/52**

(73) Proprietor: **Carl Zeiss Vision International GmbH**
**73430 Aalen (DE)**

(72) Inventors:
• **NEUFFER, Andreas**
 **71679 Asperg (DE)**
• **GLÖGE, Thomas**
 **73614 Schorndorf (DE)**
• **LAUKART, Artur**
 **73432 Aalen (DE)**

(74) Representative: **Carl Zeiss AG - Patentabteilung**
**Carl-Zeiss-Straße 22**
**73447 Oberkochen (DE)**

(56) References cited:
EP-A1- 2 437 084 EP-A1- 2 492 250
EP-A1- 3 312 662 EP-A1- 3 561 579
EP-A1- 3 561 581 WO-A1-2020/190566
WO-A2-2008/000841 DE-A1- 4 100 831
US-A1- 2007 030 569 US-A1- 2008 206 470
US-A1- 2010 134 752 US-A1- 2012 013 845
US-A1- 2015 138 638 US-A1- 2016 274 276

**EP 4 295 196 B1**

**Description**

The invention relates to a coated lens comprising a lens substrate and at least one coating, the lens substrate comprising (i) at least two different optical materials or (ii) a single optical material, and a method for manufacturing such a coated lens.

Coated lenses are according to ISO 13666:2019(E), section 3.18.1, lenses to which one or more surface layers have been added to alter one or more properties of the lens. A lens or spectacle lens is according to ISO 13666:2019(E), section 3.5.1, an ophthalmic lens worn in front of, but not in contact with, the eyeball. Coated lenses are typically based on a lens substrate of a single optical material. The optical material, according to ISO 13666:2019(E), section 3.3.1, a transparent material capable of being manufactured into optical components, may be either a glass, a thermosetting hard resin or a thermoplastic hard resin. According to ISO 13666:2019(E), section 3.3.2, a glass, inorganic glass or mineral glass is a material formed by the fusion of inorganic substance, cooled down and solidified without crystallizing. According to ISO 13666:2019(E), section 3.3.3, a thermosetting hard resin is a plastic material, consisting principally of organic polymers, that has been cured into an essentially infusible and insoluble state, and cannot be usefully reshaped on heating. According to ISO 13666:2019(E), section 3.3.4, a thermoplastic hard resin is a plastic material consisting principally of organic polymers, that can be repeatedly softened by heating and hardened by cooling, and in the softened state can be shaped by flow into lenses or blanks by moulding, extrusion and forming. Typically, a wearer selects the optical material of a spectacle lens, preferably a coated lens, according to personal preferences. Wearers appreciating for example the high imaging quality, the high scratch resistance and/or the durability might preferably decide for spectacle lenses, preferably coated lenses, based on a glass. Wearers highly appreciating for example the low weight might preferably decide for spectacle lenses, preferably coated lenses, based on a thermosetting hard resin or a thermoplastic hard resin.

Spectacle lenses based on different optical materials may combine the advantages of the respective optical materials. Spectacle lenses comprising different optical materials are described for example in EP 0 182 503A2, EP 3 396 439 A1, EP 3 474 063 A1, EP 3 561 581 A1, EP 3 561 579 A1, or EP 3 312 662 A1.

EP 0 182 503 A2 discloses a composite glass/plastic ophthalmic lens consisting of a glass layer of nearly uniform thickness and a plastic lens or plastic blank. The curvature of the back surface of the glass layer has a slightly larger radius of curvature than the radius of curvature of the front surface of the plastic lens or the plastic blank. This difference in curvature results in a radially tapered gap between the two adjacent surfaces, the radially tapered gap having its maximum distance at the edge. The two adjacent surfaces are bonded via an adhesive, which is optically clear, highly elastic and substantially inert over a wide temperature and humidity range. The glass layer may be either clear or may provide photochromic characteristics to the composite glass/plastic ophthalmic lens.

EP 3 396 439 A1 discloses a glass and plastic ophthalmic lens. The lens includes a first glass layer, a second adhesive layer and a third plastic layer, wherein the optical power difference between the first glass layer and the third plastic layer is from 0 to 0.1 Diopter (D). The concave surface of the first glass layer is laminated to the convex surface of the third plastic layer. The thickness of the second adhesive layer, which is a photocurable adhesive, is from 0.001 to 0.5 mm.

EP 3 474 063 A1 discloses an optical lens comprising a mineral glass element on the front surface and an eye protector arranged at least on the rear surface. The eye protector, comprising a polymer wafer, should prevent any piece of the mineral glass element from reaching the wearer's eye when the element is broken. The mineral glass element and the polymer wafer may be either plano or may have a dioptric function. The mineral glass element may comprise at least an electro active element, such as electrochromic cells, liquid crystal cells, a wave guide and/or a holographic mirror. The polymer wafer may have an anti-scratch function, an anti-static function, an anti-fouling function, an anti-fog function, a light absorption function, for example blue cut and/or UV protection, or a reflection function, for example antireflective properties.

EP 3 561 581 A1 discloses a spectacle lens comprising a photochromic coating and different coating on top thereof to protect the photochromic coating. The spectacle lens may comprise an anti-reflective coating, for example an anti-reflective coating according to EP 2 437 084 A1, figures 3 and 5.

EP 3 561 579 A1 and EP 3 312 662 A1 disclose a spectacle lens comprising an ultrathin lens on the front surface and optionally on the back surface thereof. The spectacle lens may comprise an anti-reflective coating, for example an anti-reflection coating according to EP 2 437 084 A1, figures 3 and 5.

WO 2014/202391 A1 discloses optical components comprising a layer system. The layer system is made of a thin glass film and a plastic material. The optical material may be used as mirror, lens, window, beam distributor or waveguide, for example. The planar thin glass film may be coated with an optical coating, for example an anti-reflective coating. The coated planar thin glass film is then formed and assembled with the plastic material. The plastic material may comprise a UV absorbing coating.

WO 2020/190566 A1 discloses an anti-reflective lens, the anti-reflective coating thereof includes an adhesion layer, a low index layer, a high index layer, and a superhydrophobic material. The substrate of the anti-reflective lens may be fabricated from glass, polymer, synthetic plastic, or combinations thereof.

Coated lenses of high quality typically comprise on the front surface, according to ISO 13666:2019(E), section 3.2.13, the surface of the lens intended to be fitted away from the eye, and on the back surface, according to ISO 13666:2019(E), section 3.2.14, the surface of the lens intended to be fitted nearer to the eye, at least one anti-reflective coating. An anti-reflective coating is according to ISO 13666:2019(E), section 3.18.3, a coating on the surface of a lens intended to reduce light reflected from its surfaces. An anti-reflective coating typically comprises an interference layer system which comprises at least two layers with various optical characteristics and thicknesses. An anti-reflective coating is preferably applied via physical vapor deposition coating techniques. The luminous transmittance, according to ISO 13666:2019(E), section 3.17.6, the ratio of the luminous flux transmitted by the lens or filter to the incident luminous flux for a specified illuminant and photopic vision, of a coated lens comprising at least one anti-reflective coating on the front surface and on the back surface thereof is increased to >98% compared to the luminous transmittance of the respective uncoated lens substrate which is approximately 90% to 92%. In case a coated lens is based on a lens substrate of a single optical material, the front surface and the back surface thereof may comprise the same coating(s) and/or the same coating sequence which may be applied under identical or at least similar process conditions. To apply the same anti-reflective coating to the front surface and to the back surface, the distance of the surface to be coated to the coating source typically needs to be considered. A coated lens may comprise different anti-reflective coatings on the front surface and on the back surface, for example dependent of the function the respective anti-reflective coating should fulfill. In case a spectacle is based on a lens substrate comprising at least two different optical materials, one optical material being a glass and one optical material being a thermosetting hard resin or a thermoplastic hard resin, the process conditions for applying at least one coating are not necessarily identical and at worst incompatible to the process conditions for applying at least one coating to a lens substrate comprising a single optical material. In case, the lens substrate comprises a glass, the process conditions to apply for example an anti-reflective coating tolerate temperatures > 200°C and are preferably ranging from 220°C to 300°C. In case, the lens substrate comprises a thermosetting hard resin or a thermoplastic hard resin, the process conditions to apply for example an anti-reflective coating and optionally a clean coating typically uses temperatures < 80°C to avoid any deterioration of the optical and/or mechanical properties of the respective lens substrate. Therefore, a lens substrate comprising a glass and a thermosetting hard resin or a thermoplastic hard resin, could not be coated with an anti-reflective coating by using the process conditions typically applied for coating a lens substrate based on a glass, in particular by using the higher temperatures typically tolerated by a lens substrate based on a glass. Further, an anti-reflective coating that is optimized or adapted with respect to one optical material is not necessarily applicable to another optical material, in particular if one optical material is a glass and the other one is a thermosetting hard resin or a thermoplastic hard resin. For example, in case an anti-reflective coating and a clean coating are applied to a lens substrate based on a glass by using the identical process conditions as for applying the identical anti-reflective coating and the identical clean coating to a lens substrate based on a thermosetting hard resin or a thermoplastic hard resin, in particular by using the lower temperatures not deteriorating the respective resin, the resulting anti-reflective coating does not necessarily meet the quality requirements for a coated lens. For example, the scratch resistance of such a coated lens can be much lower than the scratch resistance obtainable with the identical anti-reflective coating applied to a lens substrate based on a thermosetting hard resin or a thermoplastic hard resin.

Therefore, it has been the problem of the invention to provide a coating for a spectacle lens, the identical coating being applicable to lens substrates of different optical materials or to lens substrates comprising different optical materials. Further, it has been the problem of the invention to provide a method for manufacturing a coated lens based on a lens substrate comprising different optical materials without the necessity of subsequently assembling different coated optical materials.

The problem has been solved by the coated lenses according to claim 1 and the methof for manufacturing the coated lenses according to claim 9.

The coated lens comprises a lens substrate, the lens substrate preferably comprises at least two different optical materials. The at least two optical materials preferably are selected from the group consisting of at least one thermosetting hard resin, at least one thermoplastic hard resin, at least one photochromic material and at least one glass. According to ISO 13666:2019(E), section 3.3.5, the photochromic material is a material that reversibly changes its luminous transmittance depending upon the irradiance and wavelength of the optical radiation falling upon it. The at least two optical materials further preferably are selected from the group consisting of at least one thermosetting hard resin, at least one thermoplastic hard resin, at least one photochromic material and at least one glass, wherein at least one of said optical materials comprises or is at least one glass. Further preferably, the lens substrate comprises at least one optical material comprising a glass and at least one optical material comprising a thermosetting hard resin or a thermoplastic hard resin. Further preferably, the lens substrate comprises the at least two different optical materials according to one of the following alternatives:

i) at least one optical material comprising a glass forming the front surface of the lens substrate and at least one optical material comprising a thermosetting hard resin or a thermoplastic hard resin forming the back surface thereof, or

ii) at least one optical material comprising a thermosetting hard resin or a thermoplastic hard resin forming the front surface of the lens substrate and at least one optical material comprising a glass forming the back surface thereof, or

iii) at least one optical material comprising a glass forming the front surface of the lens substrate, at least one optical material comprising at least one of the group consisting of a thermosetting hard resin and a thermoplastic hard resin forming at least one intermediate layer of the lens substrate and at least one optical material comprising a glass forming the back surface thereof, or

iv) at least one optical material comprising a thermosetting hard resin or a thermoplastic hard resin forming the front surface of the lens substrate, at least one optical material comprising at least a glass forming at least one intermediate layer of the lens substrate and at least one optical material comprising a thermosetting hard resin or a thermoplastic hard resin forming the back surface thereof.

In the alternative iii) the front surface and the back surface may comprise a glass that may be identical or different, for example identical or different at least with respect to the glass composition and/or the thickness and/or the surface topography. Preferably, in alternative iii) the front surface and the back surface comprises a glass that is identical with respect to the glass composition and/or the thickness and/or the surface topography. In the alternative iv) the front surface and the back surface may comprise a thermosetting hard resin or a thermoplastic hard resin, each thermosetting hard resin may be identical or different and each thermoplastic hard resin may be identical or different, each being identical or different at least with respect to the composition. More preferably, the lens substrate comprises at least two optical materials according to the before mentioned alternative i) or according to the before mentioned alternative iii). Most preferably, the lens substrate comprises the at least two optical materials according to the before mentioned alternative i).

In a lens substrate comprising at least two different optical materials selected from a) at least one glass and at least one thermosetting hard resin or selected from b) at least one glass and at least one thermoplastic hard resin, the at least one glass preferably comprises at least one thin glass. Each thin glass may be based on various glass compositions. Preferably, the glass composition of each thin glass is based on a borosilicate glass, an aluminum borosilicate glass or an alkali-free borosilicate glass, more preferably the glass composition is based on a borosilicate glass. The thickness of each thin glass preferably lies in a range from 30 $\mu$m to 300 $\mu$m, further preferably in a range from 40 $\mu$m to 280 $\mu$m, further preferably in a range from 50 $\mu$m to 260 $\mu$m, more preferably in a range from 60 $\mu$m to 240 $\mu$m and most preferably in a range from 90 $\mu$m to 220 $\mu$m. The thickness of each thin glass preferably is determined of the respective planar thin glass before the forming into its final form and shape. Preferably, the thickness of each thin glass is determined with the Filmetrics F10-HC instrument, company Filmetrics Inc. Preferably, the thickness of each thin glass is the average thickness. The average surface roughness of each thin glass surface, preferably each thin glass front and back surface, preferably is Ra < 1 nm. Further preferably, the average surface roughness Ra of each thin glass surface is within a range from 0.1 nm to 0.8 nm, more preferably within a range from 0.3 nm to 0.7 nm and most preferably within a range from 0.4 nm to 0.6 nm. The values given for the average surface roughness Ra preferably apply with respect to each thin glass surface before forming into the final form and shape. Depending on the shaped body used for forming, the values given for the average surface roughness Ra may apply with respect to the thin glass surface in its final form and shape as well. The average surface roughness Ra of each thin glass surface preferably is determined with the NewView 7100 instrument, company Zygo Corporation.

The thin glass comprises a surface topography selected from at least one of a spherical surface, according to ISO 13666:2019(E), section 3.4.1, defined as part of the inside or outside surface of a sphere; an aspherical surface, according ISO 13666:2019(E), section 3.4.3, defined as surface of revolution having continuously variable curvature over all or part of its areas; a toroidal surface, according to ISO 13666:2019(E), section 3.4.6, defined as surface having mutually perpendicular and circular principal meridians of unequal curvature; an atoroidal surface, according to ISO 13666:2019(E), section 3.4.7, defined as surface having mutually perpendicular principal meridians of unequal curvature, at least one of which has asphericity; and a power-variation surface, according to ISO 13666:2019(E), section 3.4.10, defined as surface with a smooth variation of surface power over part or all of its area, without discontinuity. Preferably, the surface topographies of the front surface and the back surface of the thin glass are identical. Further preferably, the surface topography of the thin glass corresponds to a spherical surface.

Thin glasses are commercially available, for example, under the names: D 263 T eco, D 263 LA eco, D 263 M, AF 32 eco, AS 87 eco, B 270 I, each from Schott AG, or Corning Willow Glass or Corning Gorilla Glass, each from Corning Inc.

In a lens substrate comprising a) at least one thin glass and at least one thermosetting hard resin or b) at least one thin glass and at least one thermoplastic hard resin, the at least one thin glass may be clear according to the definition given in ISO 13666:2019(E), section 3.5.7, for a clear lens, absorptive according to the definition given in ISO 13666:2019(E), section 3.5.5, for an absorptive lens, tinted according to the definition given in ISO 13666:2019(E), section 3.5.6, for a tinted lens, or photochromic according to the definition given in ISO 13666:2019(E), section 3.5.11, for a photochromic lens. Preferably, the at least one thin glass is clear within the definition of a clear lens according to ISO 13666:2019(E), section 3.5.7, i.e. with no intended color/tint in transmission.

In the lens substrate comprising a) at least one thin glass and at least one thermosetting hard resin or b) at least one thin glass and at least one thermoplastic hard resin, the at least one thermosetting hard resin or the at least one thermoplastic hard resin each may be clear, absorptive, tinted, photochromic, each according to the definitions given in ISO 13666:2019(E) mentioned before, and/or the at least one thermosetting hard resin or the at least one thermoplastic hard resin may be polarizing according to the definition given in ISO 13666:2019(E), section 3.5.12. Preferably, the at least one thermosetting hard resin or the at least one thermoplastic hard resin is clear.

Further, in the lens substrate comprising a) at least one thin glass and at least one thermosetting hard resin or b) at least one thin glass and at least one thermoplastic hard resin, the at least one thermosetting hard resin or the at least one thermoplastic hard resin each may be classified according to the state of manufacture as an uncoated or precoated blank, the blank being defined in ISO 13666:2019(E), section 3.8.1, as piece of optical material with one optically finished surface for the making of a lens; as an uncoated or precoated single-vision blank, the single-vision blank being defined in ISO 13666:2019(E), section 3.8.2, as blank with the finished surface having a single nominal surface power; as an uncoated or precoated multifocal blank, the multifocal blank being defined in ISO 13666:2019(E), section 3.8.3, as blank with the finished surface having two or more visibly divided portions of different dioptric powers or focal powers; as an uncoated or precoated progressive-power blank, the progressive-power blank being defined in ISO 13666:2019(E), section 3.8.5, as power-variation blank where the finished surface is a progressive-power surface; as an uncoated or precoated degressive-power blank, the degressive-power blank being defined in ISO 13666:2019(E), section 3.8.6, as power-variation blank where the finished surface is a degressive-power surface; as an uncoated or precoated finished lens, the finished lens being defined in ISO 13666:2019(E), section 3.8.7, as lens of which both sides have their final optical surface; as an uncoated or precoated uncut lens, the uncut lens being defined in ISO 13666:2019(E), section 3.8.8, as finished lens prior to edging; or as an uncoated or precoated edged lens, the edged lens being defined in ISO 13666:2019(E), section 3.8.9, as finished lens edged to final size and shape. If one of the before mentioned blanks is precoated, the respective final optical surface comprises at least one coating. If one of the before mentioned lenses is precoated, at least one side thereof comprises at least one coating. Needless to say, prior to the assembling of the different optical materials, the surfaces which are facing each other or are adjacent in the resulting lens substrate must have their final optical surface and optionally their at least one coating. Preferably, the at least one thermosetting hard resin or the at least one thermoplastic hard resin each may be classified as an uncoated or precoated finished lens or an uncoated or precoated uncut lens.

Alternatively, in the lens substrate comprising a) at least one thin glass and at least one thermosetting hard resin or b) at least one thin glass and at least one thermoplastic hard resin, the at least one thermosetting hard resin or the at least one thermoplastic hard resin each may be classified according to the form as afocal lens with nominally zero dioptric power according to ISO 13666:2019(E), section 3.6.3, or according to the function as corrective lens according to ISO 13666:2019(E), section 3.5.3, as a lens with dioptric power.

Alternatively, in the lens substrate comprising a) at least one thin glass and at least one thermosetting hard resin or b) at least one thin glass and at least one thermoplastic hard resin, the at least one thermosetting hard resin or the at least one thermoplastic hard resin each may be classified according to the type as single-vision lens according to ISO 13666:2019(E), section 3.7.1; as position-specific single-vision lens according to ISO 13666:2019(E), section 3.7.2; as multifocal lens according to ISO 13666:2019(E), section 3.7.3; as bifocal lens according to ISO 13666:2019(E), section 3.7.4; as trifocal lens according to ISO 13666:2019(E), section 3.7.5; as fused multifocal lens according to ISO 13666:2019(E), section 3.7.6; as power-variation lens according to ISO 13666:2019(E), section 3.7.7; as progressive-power lens according to ISO 13666:2019(E), section 3.7.8; or as degressive-power lens according to ISO 13666:2019(E), section 3.7.9.

Further, in the lens substrate comprising a) at least one thin glass and at least one thermosetting hard resin or b) at least one thin glass and at least one thermoplastic hard resin, the at least one thermosetting hard resin or the at least one thermoplastic hard resin preferably comprises at least one of the resins mentioned in table 1 below.

Table 1: Thermosetting hard resins or thermoplastic hard resins

| Trade name | Resin | Average refractive index $n_D$* | Abbe number $v_D$* |
|---|---|---|---|
| CR-39, CR-330, CR-607, CR-630, RAV 700, RAV 7NG, RAV 7AT, RAV 710, RAV 713, RAV 720 | Polyallyldiglycol carbonate ((P)ADC) | 1.500 | 56 |

(continued)

| Trade name | Resin | Average refractive index $n_D$* | Abbe number $v_D$* |
|---|---|---|---|
| RAVolution | Polyurea / Polyurethane | 1.500 | 54 |
| Trivex | Polyurea / Polyurethane | 1.530 | 45 |
| Panlite, Lexan, Makrolon | Polycarbonate (PC) | 1.590 | 29 |
| MR-6 | Polythiourethane | 1.598 | |
| MR-8 | Polythiourethane | 1.598 | 41 |
| MR-7 | Polythiourethane | 1.664 | 32 |
| MR-10 | Polythiourethane | 1.666 | 32 |
| MR-174 | Polyepisulfide | 1.738 | 32 |
| MGC 1.76 | Polyepisulfide | 1.76 | 30 |
| Spectralite | Urethane /Methacrylate | 1.54 | |
| * bezogen auf Natrium D-Linie | | | |

The surface of the lens substrate comprising an optical material selected from at least one of a thermosetting hard resin and a thermoplastic hard resin may be coated with a coating sequence that is usually applied to a lens substrate consisting of a single thermosetting hard resin or a single thermoplastic hard resin. The respective surface may comprise in the coating sequence at least one coating selected from the group consisting of at least one primer coating; at least one hard coating, according to ISO 13666:2019(E), section 3.18.2, being a coating on the surface of an organic lens intended to enhance the abrasion resistance of the surface during normal use; at least one anti-reflective coating, according to ISO 13666:2019(E), section 3.18.3, being a coating on the surface of a lens intended to reduce light reflected from its surfaces; at least one clean coating, according to ISO 13666:2019(E), section 3.18.4, being a coating on the surface of a lens intended to make the surface repel dust and grease and/or to make it easier to clean; at least one hydrophobic coating, according to ISO 13666:2019(E), section 3.18.5, being a coating on the surface of a lens intended to repel water droplets; at least one hydrophilic coating, according to ISO 13666:2019(E), section 3.18.6, being a coating on the surface of a lens intended to wet very easily, so that water droplets on it spread and coalesce to a uniform film on the surface; at least one anti-fog coating, according to ISO 13666:2019(E), section 3.18.7, being a hydrophobic or hydrophilic coating on the surface of a lens intended to reduce blur caused by droplets of condensed water vapor on the lens' surface when a relatively cold lens is put into a warmer, humid environment; at least one anti-static coating, according to ISO 13666:2019(E), section 3.18.8, being a coating on the surface of a lens intended to reduce static electricity on the surface, in order to reduce the attraction of dust; and at least one photochromic coating. In case, the lens substrate comprises for example the two different optical materials according to one of the preferred alternatives i) or ii) described before, preferably the optical material selected from at least one of a thermosetting hard resin and a thermoplastic hard resin is coated prior to the assembly with the optical material comprising a glass. The surface of the respective resin that is after the assembly facing or adjacent to the surface of the glass as well as the surface of the respective resin that is after the assembly not facing or not adjacent to the surface of the glass may be coated with at least one the before mentioned coatings. In case, the lens substrate comprises for example the two different optical materials according to one of the preferred alternatives iii) or iv) described before, should comprise at least one coating in between the different optical materials, for example at least one of the before mentioned coatings, at least one of the surfaces facing or being adjacent to another surface of an optical material must be coated prior to the assembly of the respective optical materials.

Preferably, the surface of the lens substrate comprising an optical material selected from at least one of a thermosetting hard resin and a thermoplastic hard resin comprises a coating sequence which comprises optionally at least one primer coating, at least one hard coating, at least one anti-reflective coating, preferably one anti-reflective coating, at least one clean coating, preferably one clean coating. Further preferably, the surface of the lens substrate comprising an optical material selected from at least one of a thermosetting hard resin and a thermoplastic hard resin comprises a coating sequence which comprises beginning from the surface of the lens substrate optionally at least one primer coating, preferably one primer coating, at least one hard coating, preferably one hard coating, at least one anti-reflective coating, preferably one anti-reflective coating, at least one clean coating, preferably one clean coating. The before mentioned coating sequence "primer coating / hard coating / anti-reflective coating / clean coating" preferably is the coating sequence applied to the surface of the lens substrate not facing or not being adjacent to another optical material.

At least one of the surfaces of the lens substrate comprising an optical material selected from at least one of a thermosetting hard resin and a thermoplastic hard resin, preferably in the alternatives ii) and iv) described before the front surface of the respective lens substrate, may comprise at least one of the photochromic coatings disclosed in EP 1 433 814 A1, EP 1 602 479 A1, or EP 1 561 571 A1. At least one of the surfaces of the lens substrate comprising an optical material selected from at least one of a thermosetting hard resin and a thermoplastic hard resin, preferably in the alternatives ii) and iv) described before the front surface of the respective lens substrate, may further comprise at least one photochromic primer, for example the one disclosed in WO 03/058300 A1, page 22, line 3 to page 23, line 13.

At least one of the surfaces of the lens substrate comprising an optical material selected from at least one of a thermosetting hard resin and a thermoplastic hard resin, preferably in the alternatives ii) and iv) described before the front surface and optionally the back surface of the respective lens substrate, may comprise at least one primer coating, the at least one primer coating preferably being based on at least one primer coating composition comprising i) at least one aqueous aliphatic, cycloaliphatic, aromatic or heteroaromatic polyurethane dispersion, at least one aqueous aliphatic, cycloaliphatic, aromatic or heteroaromatic polyurea dispersion, at least one aqueous aliphatic, cycloaliphatic, aromatic or heteroaromatic polyurethane-polyurea dispersion and/or at least one aqueous aliphatic, cycloaliphatic, aromatic or heteroaromatic polyester dispersion, preferably at least one aqueous aliphatic polyurethane dispersion or at least one aqueous aliphatic polyester dispersion and more preferably at least one aqueous aliphatic polyurethane dispersion, and ii) at least one solvent, and iii) optionally at least one additive. At least one of the surfaces of the lens substrate comprising an optical material selected from at least one of a thermosetting hard resin and a thermoplastic hard resin, preferably in the alternative i) described before the back surface of the lens substrate, may comprise at least one primer coating, the at least one primer coating preferably being based on the at least one primer coating composition mentioned before.

At least one of the surfaces of the lens substrate comprising an optical material selected from at least one of a thermosetting hard resin and a thermoplastic hard resin, preferably in the alternatives ii) and iv) described before the front surface and optionally the back surface of the respective lens substrate, may comprise at least one hard coating selected from at least one of the hard coatings disclosed in US 2005/0171231 A1, US 2009/0189303 A1, US 2002/0111390 A1, and EP 2 578 649 A1. The at least one hard coating preferably is either based on i) at least one hard coating composition comprising

A)

a) at least one silane derivative of the formula (I) $Si(OR^1)(OR^2)(OR^3)(OR^4)$, wherein $R^1$, $R^2$, $R^3$ and $R^4$, which may be the same or different, are selected from an alkyl, an acyl, an alkyleneacyl, a cycloalkyl, an aryl or an alkylenearyl group, each of which may optionally be substituted, and/or
b) at least one hydrolysis product of the at least one silane derivative of the formula (I), and/or
c) at least one condensation product of the at least one silane derivative of the formula (I), and/or
d) any mixture of the components a) to c) thereof;

B)

a) at least one silane derivative of the formula (II) $R^6R^7_{3-n}Si(OR^5)_n$, in which $R^5$ is selected from an alkyl, an acyl, an alkyleneacyl, a cycloalkyl, an aryl or an alkylenearyl group, each of which may optionally be substituted, $R^6$ is an organic radical containing at least one epoxide group, $R^7$ is selected from an alkyl, a cycloalkyl, an aryl or an alkylenearyl group, each of which may optionally be substituted, n is 2 or 3; and/or
b) at least one hydrolysis product of the at least one silane derivative of the formula (II), and/or
c) at least one condensation product of the at least one silane derivative of the formula (II), and/or
d) any mixture of the components a) to c) thereof;

C) at least one colloidal inorganic oxide, hydroxide, oxide hydrate, fluoride and/or oxyfluoride;
D) at least one epoxide compound having at least two epoxide groups; and
E) at least one catalyst system comprising at least one Lewis acid and at least one thermolatent Lewis acid-base adduct;
or ii) at least one hard coating composition comprising

A)

a) at least one silane derivative of the formula (III) $R^1R^2_{3-n}Si(OR^3)_n$, wherein $R^1$ comprises an alkyl group, a cyclo alkyl group, an acyl group, an aryl group or a hetero aryl group, each of which may be substituted, $R^2$ is an organic rest comprising an epoxide group, $R^3$ comprises an alkyl group, a cyclo alkyl group, an aryl group or a hetero aryl group, each of which may be substituted, n = 2 or 3, and/or
b) at least one hydrolysis product of the silane derivative of the formula (III), and/or
c) at least one condensation product of the silane derivative of the formula (III), and/or
d) any mixture of components a) to c);

B) at least one colloidal inorganic oxide, hydroxide, oxide hydrate, fluoride and/or oxyfluoride;
C) at least one epoxy component comprising at least two epoxy groups; and
D) at least one catalyst system comprising at least one Lewis acid and at least one thermolatent Lewis base-adduct.

At least one of the surfaces of the lens substrate comprising an optical material selected from at least one of a thermosetting hard resin and a thermoplastic hard resin, preferably in the alternative i) described before the back surface of the lens substrate, may comprise at least one hard coating, the at least one hard coating preferably being selected of one of the hard coatings or hard coating compositions mentioned before.

At least one of the surfaces of the lens substrate comprising an optical material selected from at least one of a thermosetting hard resin and a thermoplastic hard resin, preferably in the alternatives ii) and iv) described before the front surface and optionally the back surface of the respective lens substrate, preferably comprises at least one anti-reflective coating. The at least one anti-reflective coating may comprise, in examples not covered by the invention, one of the anti-reflective coatings disclosed in EP 2 437 084 A1 or in EP 2 850 484 A1. At least one of the surfaces of the lens substrate comprising an optical material selected from at least one of a thermosetting hard resin and a thermoplastic hard resin, preferably in the alternative i) described before the back surface of the lens substrate, may comprise at least one anti-reflective coating, the anti-reflective coating, for example, comprising one of the anti-reflective coatings mentioned before. The at least one anti-reflective coating comprised in a coating sequence of the front surface and comprised in a coating sequence of the back surface of the respective lens substrate may be identical to or different from each other.

EP 2 437 084 A1 discloses an optically broadband anti-reflective coating to be applied to a lens element produced of organic polymers, wherein a hard coating is formed adjacent to the lens element. The hard coating serves herein for stress compensation between the inorganic layers of the anti-reflective coating and the surface of the lens substrate. The layers of the anti-reflective coating have a relatively low coefficient of thermal expansion, whereas the lens element produced of organic polymers enjoys a high coefficient of thermal expansion. Further, the surface of the hard coating facing away from the lens element forms a surface with good adhesive strength for the anti-reflective coating. The anti-reflective coating according to EP 2 437 084 A1 comprises exactly one high-refractive-index layer having a thickness of less than 40 nm, preferably less than 20 nm, or at least two high-refractive-index layers having together an overall thickness of less than 40 nm, preferably one of the at least two high-refractive-index layers having a thickness of less than or equal to about 10 nm. The at least one high-refractive index layer is preferably formed of $ZrO_z$, $TiO_z$ or $Ta_2O_5$. According to EP 2 437 084 A1, figure 3 or figure 5, one surface of the lens element each discloses a layer sequence and respective layer thicknesses for an anti-reflective coating on top and adjacent to a hard coating and underneath a superhydrophobic layer as given in following table 2.

Table 2: Layer sequences and layer thicknesses of the anti-reflective coatings according to figures 3 and 5 of EP 2 437 084 A1

| layer sequence, figure 3 of EP 2 437 084 A1 | layer thickness, figure 3 of EP 2 437 084 A1 | layer sequence, figure 5 of EP 2 437 084 A1 | layer thickness, figure 5 of EP 2 437 084 A1 |
|---|---|---|---|
| hard coating | 1-10 $\mu$m | hard coating | 1-10 $\mu$m |
| $Al_2O_3$ | 25 nm | $Al_2O_3$ | 57 nm |
| $SiO_2$ | 25 nm | $SiO_2$ | 25 nm |
| $Al_2O_3$ | 50 nm | $Al_2O_3$ | 44 nm |
| $SiO_2$ | 60 nm | $SiO_2$ | 61 nm |
| $Al_2O_3$ | 115 nm | $Al_2O_3$ | 60 nm |
| $TiO_2$ | 13 nm | $TiO_2$ | 8.5 nm |

(continued)

| layer sequence, figure 3 of EP 2 437 084 A1 | layer thickness, figure 3 of EP 2 437 084 A1 | layer sequence, figure 5 of EP 2 437 084 A1 | layer thickness, figure 5 of EP 2 437 084 A1 |
|---|---|---|---|
| $Al_2O_3$ | 10 nm | $Al_2O_3$ | 45 nm |
| $SiO_2$ | 101 nm | $TiO_2$ | 22 nm |
| superhydrophobic layer | 5 nm | $SiO_2$ | 106 nm |
| - | - | superhydrophobic layer | 5 nm |

EP 2 850 484 A1 discloses an anti-reflective coating having the following properties: an average blue reflectance factor (Rm,B) within a wavelength range of from 420 nanometers to 450 nanometers, which is higher than or equal to 5%, for an angle of incidence ranging from 0° to 15°, a spectral reflectivity curve for an angle of incidence ranging from 0° to 15°, this reflectivity curve having: a maximum reflectivity at a wavelength of less than 435 nanometers, and a full width at half maximum (FWHM) higher than or equal to 80 nanometers, and for an angle of incidence $\theta$ ranging from 0° to 15° and for an angle of incidence 0' ranging from 30° to 45°, a parameter $\Delta(\theta,\theta')$ defined by the relation $\Delta(\theta,\theta') = 1 - [R\,\theta'\,(435\,nm) / R\,\theta\,(435\,nm)]$, in such a way that this parameter $\Delta(\theta,\theta')$ is higher than or equal to 0.6, where $R\,\theta\,(435\,nm)$ represents the reflectivity value of the main face comprising said filter at a 435 nanometer-wavelength for the angle of incidence $\theta$, and $R\,\theta'\,(435\,nm)$ represents the reflectivity value of the main face comprising said filter at a 435 nanometer-wavelength for the angle of incidence 0'. The anti-reflective coating described may comprise one of the following layer sequences and layer thicknesses shown in table 3.

Table 3: Layer sequences and layer thicknesses of the anti-reflective coatings according to examples 1 to 3 of EP 2 850 484 A1

| layer sequence, example 1 | layer thicknesses, example 1 | layer sequence, example 2 | layer thicknesses, example 2 | layer sequence, example 3 | layer thicknesses, example 3 |
|---|---|---|---|---|---|
| substrate + hard coating | | substrate + hard coating | | substrate + hard coating | |
| $ZrO_2$ | 34 nm | $ZrO_2$ | 44 nm | $ZrO_2$ | 47 nm |
| $SiO_2$ | 35 nm | $SiO_2$ | 45 nm | $SiO_2$ | 50 nm |
| $ZrO_2$ | 73 nm | $ZrO_2$ | 68 nm | $ZrO_2$ | 54 nm |
| $SiO_2$ | 110 nm | $SiO_2$ | 32 nm | $SiO_2$ | 70 nm |
| air | | $ZrO_2$ | 66 nm | $ZrO_2$ | 45 nm |
| - | | $SiO_2$ | 124 nm | $SiO_2$ | 62 nm |
| | | air | | $ZrO_2$ | 53 nm |
| | | - | | $SiO_2$ | 134 nm |
| | | | | air | |

At least one of the surfaces of the lens substrate comprising an optical material selected from at least one of a thermosetting hard resin and a thermoplastic hard resin, preferably in the alternatives ii) and iv) described before the front surface and optionally the back surface of the respective lens substrate, each may comprise at least one clean coating, the at least one clean coating preferably comprising perfluoropolyethers, perfluoroalkyl silanes and/or perfluoroalkyl siloxanes. The at least one clean coating preferably is the outermost coating in the respective coating sequence. At least one of the surfaces of the lens substrate comprising an optical material selected from at least one of a thermosetting hard resin and a thermoplastic hard resin, preferably in the alternative i) described before the back surface of the lens substrate, may comprise at least one clean coating, the at least one clean coating preferably comprising perfluoropolyethers, perfluoroalkyl silanes and/or perfluoroalkyl siloxanes.

The coating sequence mentioned before or at least one of the coatings mentioned before may be applied to at least one of the uncoated or precoated surfaces of the lens substrate comprising an optical material selected from at least one of a thermosetting hard resin and a thermosetting hard resin.

In case either the front surface or the back surface of the lens substrate comprises an optical material selected from at least one of a thermosetting hard resin and a thermoplastic hard resin and the respective opposite surface comprises an optical material comprising a glass, as for example above described for the alternatives i) or ii), preferably both surfaces of the lens substrate comprises at least one anti-reflective coating, preferably one anti-reflective coating, in the respective coating sequence. Preferably the front surface of the lens substrate comprises an optical material comprising a glass, preferably at least one thin glass, and the back surface of the lens substrate comprises an optical material selected from at least one of a thermosetting hard resin and a thermoplastic hard resin, according to alternative i) mentioned above. An anti-reflection coating comprised in the coating sequence applied to the surface of the lens substrate comprising an optical material selected from at least one of a thermosetting hard resin and a thermoplastic hard resin does not necessarily show the identical or same properties as when the identical anti-reflection coating is comprised in the coating sequence applied to the surface of the lens substrate comprising a glass. An anti-reflection coating is identical to another anti-reflection coating if preferably the layer sequence, the composition of corresponding layers and the corresponding layer thicknesses are identical. In particular with respect to the scratch resistance an anti-reflection coating comprised in the coating sequence applied to the surface of the lens substrate comprising a glass not necessarily achieves the identical or at least a similar Bayer ratio as when the identical anti-reflective coating is comprised in the coating sequence applied to the surface of the lens substrate comprising at least one of a thermosetting hard resin or a thermoplastic hard resin. Surprisingly, if the uncoated surface of the lens substrate comprising a glass is coated with an anti-reflective coating and a superhydrophobic layer according to EP 2 437 084 A1, preferably according to EP 2 437 084 A1, figure 3 or figure 5, i.e. the superhydrophobic layer being the outermost coating thereof, the scratch resistance expressed as Bayer ratio of the resulting coated surface is at least comparable as when the identical anti-reflective coating and the identical superhydrophobic layer are applied to the hard coated surface of the lens substrate comprising a thermosetting hard resin or a thermoplastic hard resin. Further, the adhesion between the anti-reflective coating and the uncoated surface of the lens substrate comprising a glass is excellent even though no hard coating as required in EP 2 437 084 A1 or any other coating in between the surface of the lens substrate and the anti-reflective coating is there. In contrast to EP 2 437 084 A1 wherein the hard coating is required to compensate stress between the inorganic layers of the anti-reflective coating and the surface of the lens substrate based on an organic material, or in contrast to EP 2 850 484 A1, wherein also a hard coating is present in between the surface of the lens substrate and the anti-reflective coating, the application of the anti-reflective coating to the surface of the lens substrate comprising a glass, preferably the front surface of a lens substrate comprising a thin glass, does not require a hard coating or any other coating in between the surface of the lens substrate comprising the glass and the anti-reflective coating. This is assumed to be due to the coefficient of expansion of the lens substrate comprising a glass being more similar to the coefficient of expansion of the anti-reflective coating than the coefficient of expansion of the lens substrate comprising at least one of a thermosetting hard resin or a thermoplastic hard resin to the coefficient of expansion of the identical anti-reflective coating. A hard coating in between the surface of a lens substrate comprising at least one of a thermosetting hard resin or a thermoplastic hard resin and the anti-reflective coating may behave as a buffer to compensate the different coefficients of expansion. Further, in case of a lens substrate comprising at least one of a thermosetting hard resin or a thermoplastic hard resin the presence of a hard coating is preferable anyway to ensure the scratch resistance of the coated lens. In a lens substrate comprising an optical material comprising at least one of a thermosetting hard resin or a thermoplastic hard resin and an optical material comprising a glass, preferably at least one thin glass, the different coefficients of expansion and the different expansions of the different optical materials due to heat for example, preferably are largely compensated preferably by at least one adhesive used to bind the different optical materials of the lens substrate. Moreover, in a lens substrate comprising an optical material comprising at least one of a thermosetting hard resin or a thermoplastic hard resin and an optical material comprising at least one thin glass, the at least one thin glass exhibits a certain flexibility, thus compensating as well at least partially an expansion of the different optical materials.

As adhesive for binding the different optical materials, a photocurable adhesive as disclosed in EP 3 395 922 A1 may be used.

In view of the drawbacks experienced with applying an anti-reflective coating designed for a coating sequence to be applied to at least one of the front surface and the back surface of a lens substrate comprising a thermosetting hard resin or a thermoplastic hard resin it has been even more surprising that not only the explicitly disclosed anti-reflective coatings of EP 2 437 084 A1, figures 3 and 5, are suitable to be applied to the surface the lens substrate comprising a glass, preferably at least one thin glass, but that also modifications of those explicitly disclosed anti-reflective coatings are suitable as well. The preferably one anti-reflective coating to be directly applied to the surface of the lens substrate comprising a glass, preferably at least one thin glass, preferably comprises a lower part and an upper part. The lower part thereof is the one to be directly applied to at least one of the front surface or the back surface of the lens substrate comprising a glass, preferably comprising at least one thin glass. Directly applied preferably means that the surface of the lens substrate to be coated does not comprise any coating in between said surface to be coated and the anti-reflective coating. In case said anti-reflective coating is to be applied to at least one of the front surface or the back surface of a lens substrate comprising a thermosetting hard resin or a thermoplastic hard resin, the lower part of said anti-reflective coating is the one to be applied to the preferably coated surface of the lens substrate. The lower part of the anti-reflective coating preferably comprises an alternating layer sequence of $[L, M]_n$, wherein L is having a wavelength dependent refractive index ranging from 1.473 at 380 nm to 1.456 at 780 nm, M is having a wavelength dependent refractive index ranging from 1.632 at 380 nm to 1.599 at 780 nm, and n is $\geq$ 1, further preferably n is ranging from 1 to 10, further preferably from 1 to 8, further preferably from 1 to 6, more preferably from 2 to 5 and most preferably from 2 to 4. Preferably, within the alternating layer sequence $[L, M]_n$ no further layer is in-between the layers L and M. Further preferably, the lower part of the anti-reflective coating comprises a layer M, preferably one single layer M, which is next to, but not necessarily directly adjacent to the surface of the lens substrate comprising a glass, preferably at least one thin glass. Preferably, the layer M is directly adjacent to the surface of the lens substrate comprising a glass, preferably at least one thin glass. Further preferably, the layer M is directly adjacent to the surface of the lens substrate comprising a glass, preferably at least one thin glass, followed by the alternating layer sequence $[L, M]_n$, wherein a layer L of $[L, M]_n$ is next that layer M that is directly adjacent to the surface of the lens substrate comprising a glass, preferably at least one thin glass, and a layer M of $[L, M]_n$ is directly adjacent to the upper part of the anti-reflective coating.

The upper part of the anti-reflective coating preferably comprises a layer sequence $[H, M, L]_m$, wherein H is having a wavelength dependent refractive index ranging from 2.832 at 380 nm to 2.270 at 780 nm, M is having a wavelength dependent refractive index ranging from 1.632 at 380 nm to 1.599 at 780 nm, L is having a wavelength dependent refractive index ranging from 1.473 at 380 nm to 1.456 at 780 nm and m is $\geq$ 1, further preferably m is ranging from 1 to 4, more preferably from 1 to 3 and most preferably from 1 to 2. The layer sequence $[H, M, L]_m$ may comprise a further layer different from or identical to any one of the layers H, M, L. In this context, a different layer is a layer that comprises at least another composition or material from any one of the layers of the layer sequence $[H, M, L]_m$. An identical layer is a layer that comprises the identical composition or material but may have another layer thickness as any one of the layers of the layer sequence $[H, M, L]_m$. Preferably identical layers are not directly adjacent to each other, preferably neither in the lower part nor in the upper part nor in between the lower and the upper part of the anti-reflective coating. Further, preferably the layers M and L are identical in the lower part and in the upper part of the anti-reflective coating. Further preferably, the layer M comprises or consists of $Al_xO_y$, wherein x is 1.5 to 2.5 and y is 2.5 to 3.5, preferably x is 2 and y is 3, or comprises or consists of $Pr_eO_f$, wherein e is 1.0 to 6 and f is 2.0 to 11, preferably e is 6 and f is 11, or the layer M comprises or consists of a mixture of $Al_xO_y$ and $Pr_eO_f$ or a mixed oxide of Al and Pr, the layer L comprises or consists of $SiO_z$, wherein z is 1.5 to 2.5, preferably z is 2, and the layer H comprises or consists of $Ti_aO_b$, wherein a is 0.5 to 1.5, preferably a is 1, and b is 1.5 to 2.5, preferably b is 2, or comprises or consists of $Nb_cO_d$, wherein c is 1.5 to 2.5, preferably c is 2 and d is 4.5 to 5.5, preferably d is 5. In an anti-reflective coating comprising at least two layers of M, each layer of M may comprise or consist of $Al_xO_y$, or comprise or consist of $Pr_eO_f$, or a mixture thereof, or a mixed oxide Al and Pr; or at least one of the layers of M may comprise or consist of $Al_xO_y$ and at least one of the layers of M may comprise or consist of $Pr_eO_f$, or a mixture of $Al_xO_y$ and $Pr_eO_f$, or a mixed oxide of Al and Pr. Preferably all layers of M comprise or consist of $Al_xO_y$ or a mixture of $Al_xO_y$ and $Pr_eO_f$ or a mixed oxide of Al and Pr. Commercially available products comprising an oxide of Al and Pr are for example Paso I, Paso II and Paso III, all company Umicore. Alternatively or additionally, in an anti-reflective coating comprising at least two layers of H, each layer of H may comprise or consist of $Ti_aO_b$ or of $Nb_cO_d$; or at least one of the layers of H may comprise or consist of $Ti_aO_b$ and at least one of the layers of H may comprise or consist of $Nb_cO_d$. Preferably all layers of H comprise or consist of $Ti_aO_b$.

The total thickness of the anti-reflective coating preferably is > 300 nm. Further preferably, the total thickness of the anti-reflective coating lies within a range from 310 nm to 760 nm, more preferably from 350 nm to 740 nm and most preferably from 390 nm to 660 nm.

Preferably, the ratio of the sum of the layer thicknesses of the layers H und M, t(H+M), to the sum of the layer thicknesses of the at least one layer L, t(L), of the anti-reflective coating is in the range of t(H+M) / t(L) > 0.6 to < 2.0, further preferably of t(H+M) / t(L) > 0.7 to < 1.7, more preferably of t(H+M) / t(L) = 0.8 to 1.5 and most preferably of t(H+M) / t(L) = 0.9 to 1.3.

Preferably, the intrinsic stress, which is compressive, of the anti-reflective coating is < 100 MPa. Further preferably, the intrinsic stress of the anti-reflective coating lies within a range from 10 MPa to 90 MPa, more preferably from 30 MPa to 80 MPa. The intrinsic stress of the anti-reflective coating preferably is measured by the deflection of a quartz substrate with an interferometer, preferably the FLX Flexus thin film stress measurement system FLX-2320-S, company Toho Technology.

The anti-reflective coating may comprise at least one of the above listed properties, either alone or in combination. The above listed properties apply as well to any one of the preferred layer sequences of the anti-reflective coating described below, either alone or in combination.

The anti-reflective coating comprises, beginning from the surface of the lens substrate comprising a glass, preferably at least one thin glass, the third layer sequence given in table 4 below or, in examples not covered by the invention, one of the other layer sequences given in table 4 below, wherein $\lambda_0$ preferably is selected from any wavelength in the range of from 500 nm to 600 nm, the refractive indices of M, L, H are wavelength dependent, M is having a wavelength dependent refractive index ranging from 1.632 at 380 nm to 1.599 at 780 nm, preferably with wavelength dependent refractive indices of 1.614 at 500 nm to 1.606 at 600 nm, L is having a wavelength dependent refractive index ranging from 1.473 at 380 nm to 1.456 at 780 nm, preferably with wavelength dependent refractive indices of 1.462 at 500 nm and 1.459 at 600 nm, H is having a wavelength dependent refractive index ranging from 2.832 at 380 nm to 2.270 at 780 nm, preferably with wavelength dependent refractive indices of 2.440 at 500 nm and 2.336 at 600 nm. Preferably, M is $Al_xO_y$, wherein x is 1.5 to 2.5, preferably 2, and y is 2.5 to 3.5, preferably 3; L is $SiO_z$, wherein z is 1.5 to 2.5, preferably 2; H is $Ti_aO_b$, wherein a is 0.5 to 1.5, preferably 1, and b is 1.5 to 2.5, preferably 2; or $Nb_cO_d$ wherein c is 1.5 to 2.5, preferably 2, and d is 4.5 to 5.5, preferably 5. Alternatively, the layer M preferably is having a wavelength dependent refractive index ranging from 1.750 at 380 nm to 1.701 at 780 nm, preferably with wavelength dependent refractive indices of 1.724 at 500 nm to 1.712 at 600 nm. In this alternative, M is one of the commercially available products comprising an oxide of Al and Pr mentioned before. As mentioned before, in an anti-reflective coating comprising at least two layers of M and/or at least two layers of H the respective layer M or H may comprise or consist of the identical composition or of a different composition.

Table 4: Preferred layer sequences and layer thicknesses of the anti-reflective coating

| substrate | Substrate | substrate |
|---|---|---|
| $0.41622 \cdot \lambda_0/4 \cdot M$-$0.89369 \cdot \lambda_0/4 \cdot M$) | $0.64253 \cdot \lambda_0/4 \cdot M$-$0.89614 \cdot \lambda_0/4 \cdot M$ | $0.19459 \cdot \lambda_0/4 \cdot L$-$0.23394 \cdot \lambda_0/4 \cdot L$ |
| $0.25968 \cdot \lambda_0/4 \cdot L$-$0.41206 \cdot \lambda_0/4 \cdot L$ | $0.08183 \cdot \lambda_0/4 \cdot M$-$0.35676 \cdot \lambda_0/4 \cdot L$ | $0.48912 \cdot \lambda_0/4 \cdot M$-$0.77248 \cdot \lambda_0/4 \cdot M$ |
| $0.41001 \cdot \lambda_0 4 \cdot M$-$0.76121 \cdot \lambda_0/4 \cdot M$ | $0.80796 \cdot \lambda_0/4 \cdot M$-$0.32864 \cdot \lambda_0/4 \cdot M$ | $0.32489 \cdot \lambda_0/4 \cdot L$-$0.61648 \cdot \lambda_0/4 \cdot L$ |
| $0.57225 \cdot \lambda_0/4 \cdot L$-$0.98335 \cdot \lambda_0/4 \cdot L$ | $0.75891 \cdot \lambda_0/4 \cdot L$-$1.02867 \cdot \lambda_0/4 \cdot L$ | $0.36292 \cdot \lambda_0/4 \cdot M$-$0.54573 \cdot \lambda_0/4 \cdot M$ |
| $0.65779 \cdot \lambda_0/4 \cdot M$-$0.88071 \cdot \lambda_0/4 \cdot M$ | $0.90476 \cdot \lambda_0/4 \cdot M$-$1.41535 \cdot \lambda_0/4 \cdot M$ | $0.48976 \cdot \lambda_0/4 \cdot L$-$0.80061 \cdot \lambda_0/4 \cdot L$ |
| $0.07069 \cdot \lambda_0/4 \cdot H$-$0.16235 \cdot \lambda_0/4 \cdot H$ | $0.10051 \cdot \lambda_0/4 \cdot H$-$0.21603 \cdot \lambda_0/4 \cdot H$ | $0.59960 \cdot \lambda_0/4 \cdot M$-$0.83505 \cdot \lambda_0/4 \cdot M$ |
| $0.47009 \cdot \lambda_0/4 \cdot M$-$0.74670 \cdot \lambda_0/4 \cdot M$ | $0.00287 \cdot \lambda_0/4 \cdot M$-$0.45506 \cdot \lambda_0/4 \cdot M$ | $0.10179 \cdot \lambda_0/4 \cdot H$-$0.23052 \cdot \lambda_0/4 \cdot H$ |
| $0.22075 \cdot \lambda_0/4 \cdot H$-$0.44188 \cdot \lambda_0/4 \cdot H$ | $0.80453 \cdot \lambda_0/4 \cdot L$-$1.27591 \cdot \lambda_0/4 \cdot L$ | $0.50401 \cdot \lambda_0/4 \cdot M$-$0.70778 \cdot \lambda_0/4 \cdot M$ |
| $0.97592 \cdot \lambda_0/4 \cdot L$-$1.37164 \cdot \lambda_0/4 \cdot L$ | - | $0.30008 \cdot \lambda_0/4 \cdot H$-$0.48019 \cdot \lambda_0/4 \cdot H$ |
| - | - | $0.99344 \cdot \lambda_0/4 \cdot L$-$1.35331 \cdot \lambda_0/4 \cdot L$ |

Further preferably, the anti-reflective coating comprises at least one of the following layer sequences and layer thicknesses, beginning from the surface of the lens substrate comprising a glass, given in table 7 below and in, examples not covered by the invention, in tables 5, 6 and 8 below. With respect to $\lambda_0$, M, L, H the before mentioned applies as well.

Table 5: Further preferred layer sequences and layer thicknesses of the anti-reflective coating

| substrate | substrate | substrate |
|---|---|---|
| $0.74131 \cdot \lambda_0/4 \cdot M$-$0.89369 \cdot \lambda_0/4 \cdot M$ | $0.64253 \cdot \lambda_0/4 \cdot M$-$0.77461 \cdot \lambda_0/4 \cdot M$ | $0.57775 \cdot \lambda_0/4 \cdot M$-$0.69651 \cdot \lambda_0/4 \cdot M$ |
| $0.34275 \cdot \lambda_0/4 \cdot L$-$0.41206 \cdot \lambda_0/4 \cdot L$ | $0.29675 \cdot \lambda_0/4 \cdot L$-$0.35676 \cdot \lambda_0/4 \cdot L$ | $0.27781 \cdot \lambda_0/4 \cdot L$-$0.33399 \cdot \lambda_0/4 \cdot L$ |
| $0.54089 \cdot \lambda_0/4 \cdot M$-$0.65207 \cdot \lambda_0/4 \cdot M$ | $0.51295 \cdot \lambda_0/4 \cdot M$-$0.61840 \cdot \lambda_0/4 \cdot M$ | $0.41001 \cdot \lambda_0/4 \cdot M$-$0.49429 \cdot \lambda_0/4 \cdot M$ |
| $0.70021 \cdot \lambda_0/4 \cdot L$-$0.84181 \cdot \lambda_0/4 \cdot L$ | $0.75891 \cdot \lambda_0/4 \cdot L$-$0.91237 \cdot \lambda_0/4 \cdot L$ | $0.57225 \cdot \lambda_0/4 \cdot L$-$0.68797 \cdot \lambda_0/4 \cdot L$ |
| $0.65779 \cdot \lambda_0/4 \cdot M$-$0.79301 \cdot \lambda_0/4 \cdot M$ | $0.69607 \cdot \lambda_0/4 \cdot M$-$0.83916 \cdot \lambda_0/4 \cdot M$ | $0.68825 \cdot \lambda_0/4 \cdot M$-$0.82973 \cdot \lambda_0/4 \cdot M$ |
| $0.12950 \cdot \lambda_0/4 \cdot H$-$0.16235 \cdot \lambda_0/4 \cdot H$ | $0.11212 \cdot \lambda_0/4 \cdot H$-$0.14056 \cdot \lambda_0/4 \cdot H$ | $0.07069 \cdot \lambda_0/4 \cdot H$-$0.08862 \cdot \lambda_0/4 \cdot H$ |
| $0.49624 \cdot \lambda_0/4 \cdot M$-$0.59825 \cdot \lambda_0/4 \cdot M$ | $0.47547 \cdot \lambda_0/4 \cdot M$-$0.57321 \cdot \lambda_0/4 \cdot M$ | $0.61938 \cdot \lambda_0/4 \cdot M$-$0.74670 \cdot \lambda_0/4 \cdot M$ |
| $0.28033 \cdot \lambda_0/4 \cdot H$-$0.35143 \cdot \lambda_0/4 \cdot H$ | $0.26473 \cdot \lambda_0/4 \cdot H$-$0.33187 \cdot \lambda_0/4 \cdot H$ | $0.35248 \cdot \lambda_0/4 \cdot H$-$0.44188 \cdot \lambda_0/4 \cdot H$ |
| $1.03563 \cdot \lambda_0/4 \cdot L$-$1.24528 \cdot \lambda_0/4 \cdot L$ | $1.03993 \cdot \lambda_0/4 \cdot L$-$1.25044 \cdot \lambda_0/4 \cdot L$ | $1.14072 \cdot \lambda_0/4 \cdot L$-$1.37164 \cdot \lambda_0/4 \cdot L$ |

Table 6: Continuation of table 5

| substrate | substrate | Substrate |
|---|---|---|
| $0.41622 \cdot \lambda_0/4 \cdot M - 0.50178 \cdot \lambda_0/4 \cdot M$ | $0.64253 \cdot \lambda_0/4 \cdot M - 0.77461 \cdot \lambda_0/4 \cdot M$ | $0.74334 \cdot \lambda_0/4 \cdot M - 0.89614 \cdot \lambda_0/4 \cdot M$ |
| $0.25968 \cdot \lambda_0/4 \cdot L - 0.31219 \cdot \lambda_0/4 \cdot L$ | $0.29675 \cdot \lambda_0/4 \cdot L - 0.35676 \cdot \lambda_0/4 \cdot L$ | $0.08183 \cdot \lambda_0/4 \cdot L - 0.09838 \cdot \lambda_0/4 \cdot L$ |
| $0.63142 \cdot \lambda_0/4 \cdot M - 0.76121 \cdot \lambda_0/4 \cdot M$ | $0.27260 \cdot \lambda_0/4 \cdot M - 0.32864 \cdot \lambda_0/4 \cdot M$ | $0.80796 \cdot \lambda_0/4 \cdot M - 0.97404 \cdot \lambda_0/4 \cdot M$ |
| $0.81794 \cdot \lambda_0/4 \cdot L - 0.98335 \cdot \lambda_0/4 \cdot L$ | $0.75891 \cdot \lambda_0/4 \cdot L - 0.91237 \cdot \lambda_0/4 \cdot L$ | $0.85564 \cdot \lambda_0/4 \cdot L - 1.02867 \cdot \lambda_0/4 \cdot L$ |
| $0.73054 \cdot \lambda_0/4 \cdot M - 0.88071 \cdot \lambda_0/4 \cdot M$ | $0.90476 \cdot \lambda_0/4 \cdot M - 1.09075 \cdot \lambda_0/4 \cdot M$ | $1.17402 \cdot \lambda_0/4 \cdot M - 1.41535 \cdot \lambda_0/4 \cdot M$ |
| $0.09924 \cdot \lambda_0/4 \cdot H - 0.12440 \cdot \lambda_0/4 \cdot H$ | $0.10051 \cdot \lambda_0/4 \cdot H - 0.12600 \cdot \lambda_0/4 \cdot H$ | $0.17232 \cdot \lambda_0/4 \cdot H - 0.21603 \cdot \lambda_0/4 \cdot H$ |
| $0.47009 \cdot \lambda_0/4 \cdot M - 0.56672 \cdot \lambda_0/4 \cdot M$ | $0.37747 \cdot \lambda_0/4 \cdot M - 0.45506 \cdot \lambda_0/4 \cdot M$ | $0.0028 \cdot \lambda_0/4 \cdot M - 0.00346 \cdot \lambda_0/4 \cdot M$ |
| $0.22075 \cdot \lambda_0/4 \cdot H - 0.27674 \cdot \lambda_0/4 \cdot H$ | $0.80453 \cdot \lambda_0/4 \cdot L - 0.96739 \cdot \lambda_0/4 \cdot L$ | $1.06110 \cdot \lambda_0/4 \cdot L - 1.27591 \cdot \lambda_0/4 \cdot L$ |
| $0.97592 \cdot \lambda_0/4 \cdot L - 1.17348 \cdot \lambda_0/4 \cdot L$ | - | - |

Table 7: Continuation of table 5

| substrate | substrate | substrate |
|---|---|---|
| $0.19459 \cdot \lambda_0/4 \cdot L - 0.23394 \cdot \lambda_0/4 \cdot L$ | $0.19459 \cdot \lambda_0/4 \cdot L - 0.23394 \cdot \lambda_0/4 \cdot L$ | $0.19459 \cdot \lambda_0/4 \cdot L - 0.23394 \cdot \lambda_0/4 \cdot L$ |
| $0.60931 \cdot \lambda_0/4 \cdot M - 0.73457 \cdot \lambda_0/4 \cdot M$ | $0.48913 \cdot \lambda_0/4 \cdot M - 0.58967 \cdot \lambda_0/4 \cdot M$ | $0.64076 \cdot \lambda_0/4 \cdot M - 0.77248 \cdot \lambda_0/4 \cdot M$ |
| $0.51278 \cdot \lambda_0/4 \cdot L - 0.61648 \cdot \lambda_0/4 \cdot L$ | $0.44872 \cdot \lambda_0/4 \cdot L - 0.53946 \cdot \lambda_0/4 \cdot L$ | $0.32489 \cdot \lambda_0/4 \cdot L - 0.39059 \cdot \lambda_0/4 \cdot L$ |
| $0.45267 \cdot \lambda_0/4 \cdot M - 0.54573 \cdot \lambda_0/4 \cdot M$ | $0.37536 \cdot \lambda_0/4 \cdot M - 0.45251 \cdot \lambda_0/4 \cdot M$ | $0.36292 \cdot \lambda_0/4 \cdot M - 0.43753 \cdot \lambda_0/4 \cdot M$ |
| $0.48976 \cdot \lambda_0/4 \cdot L - 0.58880 \cdot \lambda_0/4 \cdot L$ | $0.66595 \cdot \lambda_0/4 \cdot L - 0.80061 \cdot \lambda_0/4 \cdot L$ | $0.53342 \cdot \lambda_0/4 \cdot L - 0.641290 \cdot \lambda_0/4 \cdot L$ |
| $0.64177 \cdot \lambda_0/4 \cdot M - 0.77369 \cdot \lambda_0/4 \cdot M$ | $0.59956 \cdot \lambda_0/4 \cdot M - 0.72281 \cdot \lambda_0/4 \cdot M$ | $0.69267 \cdot \lambda_0/4 \cdot M - 0.83505 \cdot \lambda_0/4 \cdot M$ |
| $0.18388 \cdot \lambda_0/4 \cdot H - 0.23052 \cdot \lambda_0/4 \cdot H$ | $0.17148 \cdot \lambda_0/4 \cdot H - 0.21497 \cdot \lambda_0/4 \cdot H$ | $0.10179 \cdot \lambda_0/4 \cdot H - 0.12761 \cdot \lambda_0/4 \cdot H$ |
| $0.50401 \cdot \lambda_0/4 \cdot M - 0.60762 \cdot \lambda_0/4 \cdot M$ | $0.51636 \cdot \lambda_0/4 \cdot M - 0.62251 \cdot \lambda_0/4 \cdot M$ | $0.58710 \cdot \lambda_0/4 \cdot M - 0.70778 \cdot \lambda_0/4 \cdot M$ |
| $0.31035 \cdot \lambda_0/4 \cdot H - 0.38910 \cdot \lambda_0/4 \cdot H$ | $0.30008 \cdot \lambda_0/4 \cdot H - 0.37619 \cdot \lambda_0/4 \cdot H$ | $0.38304 \cdot \lambda_0/4 \cdot H - 0.48019 \cdot \lambda_0/4 \cdot H$ |
| $1.03965 \cdot \lambda_0/4 \cdot L - 1.25011 \cdot \lambda_0/4 \cdot L$ | $0.99344 \cdot \lambda_0/4 \cdot L - 1.19455 \cdot \lambda_0/4 \cdot L$ | $1.12548 \cdot \lambda_0/4 \cdot L - 1.35332 \cdot \lambda_0/4 \cdot L$ |

Table 8: Continuation of table 5

| |
|---|
| $0.35512 \cdot \lambda_0/4 \cdot L - 0.42693 \cdot \lambda_0/4 \cdot L$ |
| $0.12353 \cdot \lambda_0/4 \cdot M - 0.14892 \cdot \lambda_0/4 \cdot M$ |
| $0.97914 \cdot \lambda_0/4 \cdot L - 1.17715 \cdot \lambda_0/4 \cdot L$ |
| $0.94525 \cdot \lambda_0/4 \cdot M - 1.13955 \cdot \lambda_0/4 \cdot M$ |
| $0.14681 \cdot \lambda_0/4 \cdot L - 0.17650 \cdot \lambda_0/4 \cdot L$ |
| $0.08744 \cdot \lambda_0/4 \cdot M - 0.10541 \cdot \lambda_0/4 \cdot M$ |
| $0.28521 \cdot \lambda_0/4 \cdot H - 0.35754 \cdot \lambda_0/4 \cdot H$ |
| $0.03889 \cdot \lambda_0/4 \cdot M - 0.04689 \cdot \lambda_0/4 \cdot M$ |
| $1.17365 \cdot \lambda_0/4 \cdot L - 1.41123 \cdot \lambda_0/4 \cdot L$ |

The at least one anti-reflective coating may be designed with respect to the desired optical properties thereof preferably by using the software OptiLayer, version 12.37, of company OptiLayer GmbH, 85748 Garching b. München, or the software Essential MacLeod, version 11.00.541, of company Thin Film Center Inc., 2745 E Via Rotunda, Tucson, AZ USA. For designing the at least one anti-reflective coating, the respective refractive indices of the composition of each single layer of the anti-reflective coating preferably are assumed to be wavelength dependent.

As any one of the anti-reflective coatings mentioned before exhibits excellent properties when directly applied to the surface of the lens substrate comprising a glass, each of these anti-reflective coatings is as well highly suitable for being directly applied to at least one of the surfaces of a lens substrate comprising a glass only, i.e. comprising one optical material only. Phrased differently, the anti-reflective coatings described above turned out to be an excellent choice for at least one anti-reflective coating to be applied to a lens substrate comprising a glass only. With respect to the layer sequences and the respective layer thicknesses of such at least one anti-reflective coating it has been surprisingly found that not only the explicitly disclosed anti-reflective coatings of figures 3 and 5 of EP 2 437 084 A1 exhibit at least excellent durability, excellent scratch resistance and/or high adhesion when directly applied to at least one of the surfaces of a lens substrate comprising a glass only but that also at least one of the anti-reflective coatings described above are highly suitable to be directly applied thereto.

At least one of the before described anti-reflective coatings in turn is suitable to be comprised in the coating sequence applied to the surface of a lens substrate comprising at least one of a thermosetting hard resin or a thermoplastic hard resin. An advantage of having at least one anti-reflective coating comprised in the coating sequence applied to the surface of the lens substrate comprising a glass, preferably at least one thin glass, and at least with respect to the layer sequence and the layer materials identical at least one anti-reflective coating comprised in the coating sequence applied to the surface of the lens substrate comprising at least one of a thermosetting hard resin or a thermoplastic hard resin is at least that the optical properties of both surfaces of the coated lens are identical or easily adjustable or that both surfaces of the coated lens may have the same haptic properties, as for example an identical at least one clean coating may be applied to each outermost surface of the anti-reflective coating, the at least one clean then being the outermost coating of both surfaces of the coated lens.

Alternatively, at least one of the anti-reflective coatings mentioned before may be applied directly to the surface of a lens substrate comprising a glass, preferably to the front surface thereof comprising a thin glass, and at least one the anti-reflective coatings disclosed in EP 2 850 484 A1 for example is comprised in the coating sequence applied to the surface of the lens substrate comprising at least one of a thermosetting hard resin or a thermoplastic hard resin.

In case at least one of the anti-reflection coatings described before is applied to the surface of a lens substrate comprising at least one of a thermosetting hard resin or a thermoplastic hard resin, preferably said surface is coated with

- at least one hard coating, for example one of the before mentioned, or
- at least one primer coating and at least one hard coating, the at least one primer coating being next to, not necessarily directly adjacent to the surface of the lens substrate to be coated, for example primer coating as well as hard coating as mentioned before.

Preferably said at least one anti-reflective coating is not in direct contact or directly adjacent to the surface of a lens substrate comprising at least one of a thermosetting hard resin or a thermoplastic hard resin.

A lens substrate comprising at least two optical materials, preferably at least one of the two optical materials selected from a thermosetting hard resin and a thermoplastic hard resin and at least one of the two optical materials comprising a glass, the at least two optical materials are assembled before at least one of the front surface and/or the back surface of one of the two optical materials is coated or thereafter. In case at least one of the optical materials is coated before being assembled, at least one coating may be present in between the different optical materials.

For the alternative that different optical materials are assembled after at least one of the surfaces thereof has been coated, in a first step each surface of an optical material that is to be coated may be coated, for example by using established coating processes for the respective optical material, and in a second step, the different optical materials are assembled. Alternatively, in a first step each surface of an optical material comprising glass that is to be coated may be coated, for example by using established coating processes, in a second step the optical materials are assembled and optionally in a third step, if at least one of the front surface or the back surface of the lens substrate comprises at least one of a thermosetting hard resin or a thermoplastic hard resin, the respective surface is coated, for example by using established coating processes for the respective optical material. Irrespective of the alternative used, in case the lens substrate comprises at least one coating in-between the optical materials to be assembled, this at least one coating must be applied before assembling the respective optical materials of the lens substrate. In this alternative the lens substrate preferably comprises i) a front surface comprising a glass, a back surface comprising at least one of a thermosetting hard resin or a thermoplastic hard resin; or ii) a front surface comprising at least one of a thermosetting hard resin or a thermoplastic hard resin and a back surface comprising a glass; or iii) a front surface comprising a glass, at least one intermediate layer comprising at least one of a thermosetting hard resin or a thermoplastic hard resin and/or a glass and a back surface comprising a glass; or iv) a front surface comprising at least one of a thermosetting hard resin or a thermoplastic hard resin, at least one intermediate layer comprising a glass and/or at least one of a thermosetting hard resin or a thermoplastic hard resin and a back surface comprising at least one of a thermosetting hard resin or a thermoplastic hard resin. Preferably, the lens substrate comprises a front surface and a back surface according to i) or iii), further preferably according to i). In case, the front surface and the back surface of the lens substrate each comprises at least one anti-reflective coating in the respective coating sequence, preferably one anti-reflective coating, and the residual reflection color of both anti-reflective coatings should be the same. A larger time lag between the application of both anti-reflective coatings may make it more difficult to adjust the residual reflection color of the later applied anti-reflection coating to the first applied one. The difficulty in adjustment of the residual reflection color occurs due to the typical ageing process of an anti-reflection coating. To meet the residual reflection color of the already applied anti-reflective coating requires at least the determination of the residual reflection color thereof and an adjustment of the anti-reflective coating to be applied, for example with respect to the layer sequence and/or the process conditions. However, any deviation from an established coating process is impractical and/or undesirable in high volume production.

If coated optical materials comprising at least one anti-reflective coating having a maximum of reflection between 300 nm and 400 nm are bonded together via a UV curable adhesive for example, reflection losses due to the presence of the at least one anti-reflective coating are preferably taken into consideration. Reflection losses may be balanced out by an increased performance of the UV light source, for example a UV LED, which, in turn, may complicate the heat management and/or may have a negative influence on the durability of the UV light source.

If an optical material comprising a glass and an optical material comprising at least one of a thermosetting hard resin or a thermoplastic hard resin are each first coated with at least one established coating according to the respective established coating process for the respective optical material and afterwards assembled, the resulting properties of each outermost surface not necessarily matches to each other. To match the desired properties, for example the optical properties, the mechanical properties and/or the haptic properties of the front surface and the back surface of the resulting coated lens, preferably at least one of the outermost coatings thereof is adjusted. Further preferably, at least one of the anti-reflective coatings and at least one of the clean coatings, each clean coating being the outermost coating thereof, is adjusted to match the desired properties. The anti-reflective coating and the clean coating may be applied to the same surface of the coated lens or one of the coatings to be adjusted may be applied to the front surface and one may be applied to the back surface of the coated lens.

The at least one anti-reflective coating is preferably deposited under vacuum according to at least one of the following methods: i) by optionally ion-beam assisted electron beam gun evaporation; or ii) by ion-beam sputtering; or iii) by cathode sputtering; or iv) by plasma assisted chemical vapor deposition; or v) by optionally plasma-assisted atomic layer deposition.

In an ion-beam assisted physical vapor deposition simultaneously to the deposition the surface to be coated is bombarded with at least one ion-beam. The at least one ion-beam may be produced by at least one ion gun emitting for example gas ions of $Ar^+$, $Ar_2^+$, $O_2^+$ and/or $N_2^+$. Evaporation under vacuum in the optionally ion-beam assisted evaporation method i) can be done using at least one of the following evaporation sources: a) at least one thermal evaporator to heat the at least one component to be evaporated under vacuum by resistive heating of at least one metal container comprising said at least one component; b) at least one electron beam gun to heat the at least one component to be evaporated under vacuum via an electron beam.

A further preferred embodiment of the invention is directed to a coated lens in the form of computer-readable data. The computer-readable data of the coated lens may be

(i) stored on a computer-readable data carrier, or
(ii) in the form of a data carrier signal.

Hereby, data carrier preferably is any medium that is capable of holding computer-readable data. Examples are the hard drives and thumb drives used with computers. Data carrier signal is a structure of how information is transferred or transmitted, e.g., in a network; the data carrier signal may be transferred or transmitted as a modulation such as in binary code or in pulses and may be contained in a packet.

Preferably, the computer-readable data of the coated lens comprise a representation of the coated lens. The representation of the coated lens preferably comprises the mathematical description of the surfaces of the coated lens or of the lens substrate, in particular the mathematical description of the front surface and of the back surface (i) of the coated lens or (ii) of the lens substrate. Further preferably, the representation of the coated lens comprises the arrangement of the front surface to the back surface (i) of the coated lens or (ii) of the lens substrate. The arrangement of the front surface to the back surface may additionally comprise the thickness, such as in particular the edge thickness and/or the centre thickness, and/or the edge (i) of the coated lens or (ii) of the lens substrate.

Further preferably, the computer-readable data of the coated lens comprise the optical material the lens substrate is based on.

Further preferably, the computer-readable data of the coated lens comprise the coating sequence of the at least one anti-reflective coating.

The computer-readable data of the coated lens may comprise instructions for using the coated lens. The instructions for using the spectacle lens may be selected from at least one of the instructions selected from the group consisting of the centration point position, defined according to ISO 13666:2019(E), section 3.2.35; the face form angle, defined according to ISO 13666:2019(E), section 3.2.29; the vertex distance, defined according to ISO 13666:2019(E), section 3.2.40; the distance reference point, defined according to ISO 13666:2019(E), section 3.2.20; and the optionally the near reference point, defined according to ISO 13666:2019(E), section 3.2.21.

The computer-readable data of the coated lens may be encrypted or not encrypted.

A further preferred embodiment of the invention is directed to computer-readable instructions to produce a coated lens. The computer-readable instructions to produce a coated lens may be (a) stored on a computer-readable data carrier, or (ii) transformed into a data carrier signal.

The explanations with respect to data carrier and data carrier signal given before apply as well.

Preferably, the computer-readable instructions to produce a coated lens comprise with respect to the lens substrate the selection of the optical material(s) the lens substrate is based on.

Further preferably, the computer-readable instructions to produce a coated lens with respect to the anti-reflective coating comprise at least one instruction selected from the group consisting of the layer sequence, the pressure in the chamber used for physical vapor deposition at least of the anti-reflective coating, the evaporation rate, the atmosphere in the chamber used for physical vapor deposition, the temperature, the distance of the material to be evaporated to the surface to be coated, the relative movement of the surface to be coated to the material to be evaporated; and optionally the application of an ion gun.

The coated lens may be in the form of

- a numerical data set, or
- a data signal transferring a numerical data set,
- a data carrier storing a numerical data set.

**I Manufacturing of the coated lenses / Layer sequence and layer thickness of the coated lenses**

Examples 1 - 4

Before starting the deposition, the surface was evacuated to a pressure below 1E-4 mbar or 2E-5 mbar and then treated with ions from a built-in ion-gun from the End-Hall type. The ion treatment took place at a pressure below 3E-3mbar and at energies between 80 eV up to 140 eV and takes 120 s.

A first $Al_xO_y$ layer was deposited by electron beam gun (EBG) evaporation without any use of ion assisted deposition in high vacuum. Then the sequence $[SiO_z\ Al_xO_y]_n$ with $n \geq 1$ was applied without the use of any ion assisted deposition. During the $Al_xO_y$ layers, the additional oxygen flow had to be adjusted for the desired refractive index, optical transmittance and intrinsic stress.

Then, $Ti_aO_b$ was deposited by EBG evaporation with a deposition rate of 0.4 nm/s, 2.0A ion gun anode current, 160V anode voltage and a maximum of 60 sccm additional O2 flow. The oxygen flow had to be adjusted for the desired refractive index, optical transmittance and intrinsic stress.

Then $Al_xO_y$ was deposited by EBG evaporation without the use of any ion assisted deposition.

Then, an optional $Ti_aO_b$ layer with the same parameters as the first one was deposited.

The last $SiO_z$ layer was deposited at a deposition rate of 1.0 nm/s, 2.0A ion gun anode current, 160V anode voltage and no additional gas flow.

Deposition of the clean coating (Duralon, company Cotec GmbH) was done by thermal evaporation. Anti-reflective coatings with the layer sequences and the layer thicknesses according to the examples 1 to 4 were applied to the front surface of a thin glass (D263T eco, company Schott AG, thickness 210 $\mu$m, curvature 87 mm) comprised in a lens substrate having a back surface based on a polythiourethane (MR 7, company Mitsui Resin).

|  | example 1 / layer thickness | example 2 / layer thickness | example 3 / layer thickness | example 4 / layer thickness |
|---|---|---|---|---|
| substrate | | | | |
| $Al_2O_3$ | 60 nm | 69 nm | 54 nm | 39 nm |
| $SiO_2$ | 31 nm | 35 nm | 29 nm | 27 nm |
| $Al_2O_3$ | 48 nm | 51 nm | 38 nm | 59 nm |

(continued)

| | example 1 / layer thickness | example 2 / layer thickness | example 3 / layer thickness | example 4 / layer thickness |
|---|---|---|---|---|
| substrate | | | | |
| $SiO_2$ | 78 nm | 72 nm | 59 nm | 84 nm |
| $Al_2O_3$ | 65 nm | 61 nm | 64 nm | 68 nm |
| $TiO_2$ | 7 nm | 8 nm | 5 nm | 6 nm |
| $Al_2O_3$ | 44 nm | 46 nm | 58 nm | 44 nm |
| $TiO_2$ | 17 nm | 18 nm | 23 nm | 14 nm |
| $SiO_2$ | 107 nm | 106 nm | 117 nm | 100 nm |
| clean coating | 5 nm | 5 nm | 5nm | 5 nm |

Example 5

Anti-reflective coating and clean coating according to example 1 were applied to the front surface of a thin glass (D263T eco, company Schott AG, thickness 210 $\mu$m, curvature 87 mm) comprised in a lens substrate having a back surface based on a diethylene glycol bisallylcarbonate (RAV700, company Acomon).

Example 6

Anti-reflective coating and clean coating were applied analogously to examples 1 - 4 to the front surface of a ZEISS single vision spherical mineral 1.5 lens substrate with the layer sequence and layer thicknesses given in the table below.

Example 7

Anti-reflective coating and clean coating were applied analogously to examples 1 - 4 to the front surface of a thin glass (D263T eco, company Schott AG, thickness 210 $\mu$m, curvature 87 mm) comprised in a lens substrate having a back surface based on a polythiourethane (MR 7, company Mitsui Resin). The layer sequence and the layer thicknesses are given in the table below.

| | example 6 / layer thickness | example 7 / layer thickness |
|---|---|---|
| substrate | | |
| $Al_2O_3$ | 60 nm | 60 nm |
| $SiO_2$ | 31 nm | 31 nm |
| $Al_2O_3$ | 48 nm | 48 nm |
| $SiO_2$ | 78 nm | 78 nm |
| $Al_2O_3$ | 65 nm | 65 nm |
| $TiO_2$ | 7 nm | 7 nm |
| $Al_2O_3$ | 44 nm | 44 nm |
| $TiO_2$ | 17 nm | 17 nm |
| $SiO_2$ | 107 nm | 107 nm |
| clean coating | 5 nm | 5 nm |

Comparative example 1: Stigmal 16 with anti-reflective coating Superdiafal, company Essilor International.

Comparative example 2: Stylis with anti-reflective coating Crizal Forte UV, company Essilor International.

Comparative example 3: ZEISS single vision spherical mineral 1.5 with anti-reflective coating Super ET, company Carl Zeiss Vision GmbH.

Comparative example 4: ZEISS single vision spherical 1.67 with anti-reflective coating DuraVision Platinum UV, company Carl Zeiss Vision GmbH.

Comparative example 5: Orma with anti-reflective coating Crizal Sapphire, company Essilor International.

Comparative example 6: Plastic 1.5 with anti-reflective coating Hi-Vision LongLife, company Hoya.

Comparative example 7: Uncoated lens substrate having a front surface of thin glass (D263T eco, company Schott AG, thickness 210 $\mu$m, curvature 87 mm) and a back surface based on a polythiourethane (MR 7, company Mitsui Resin).

Comparative example 8: ZEISS single vision spherical mineral 1.5 with anti-reflective coating DuraVision Platinum UV, company Carl Zeiss Vision GmbH.

Comparative example 9: ZEISS single vision spherical mineral 1.5 with anti-reflective coating LotuTec, company Carl Zeiss Vision GmbH.

Comparative example 10: Front surface of comparative example 7 coated with anti-reflective coating LotuTec, company Carl Zeiss Vision GmbH.

Comparative example 11: Front surface of comparative example 7 coated with anti-reflective coating according to example 1 of EP 2 850 484 A1.

**II Characterization of the coated lenses**

II.1 Determination of water contact angle

The water contact angle of the coated lenses according to the examples and comparative examples was measured with an OCA20 contact angle meter, company Dataphysics; deionized water was used as liquid.

The water contact angle of the surface of the coated lens comprising the respective anti-reflective coating according to the examples and comparative examples was measured before and after the surface has been subjected to abrasion with a cotton towel (cloth No. 97597, Tricotton GbR) for 800 cycles, every 100 cycles the coated lenses has been turned by 90°. For abrasion the linear abraser BEVS 2803, company BEVS Industrial Co., Ltd. has been used, the weight applied to the surface via the cotton towel was 2.5kg.

|  | water contact angle | water contact angle after 800 cycles |
|---|---|---|
| comparative example 1 | 110 | 74 |
| comparative example 2 | 110 | 110 |
| example 1 | 109 | 108 |

The water contact angle of the coated lenses according to example 1 and the comparative examples before the abrasion is comparable. After the abrasion, the water contact angle of the coated lens according to example 1 and comparative example 2 was unaffected whereas the water contact angle of the coated lens according comparative example 1 was impaired.

II.2 Determination of the adhesion / Cross-cut test

For the determination of the adhesion of the anti-reflective coating of the coated lenses according to the examples or comparative examples the cross-cut test was done, using a blade to cut through the coating to the substrate. At least two cuts are made that intersect at 90 degrees to get a right-angle lattice pattern. The adhesive tape Scotch 600, company 3M, was applied to and removed from the lattice pattern. The cross-cut area was visually examined for any adhesion failure with the naked eye according to the catalogue "QC solutions for coatings and plastics 2018", BYK-Gardner, page 158:

0 means that the edges of the cuts were completely smooth, none of the squares of the lattices were detached;

1 means that at the intersections of the cuts small flakes were detached, a cross-cut area not significantly greater than 5% was affected;

2 means that the coating has been flaked along the edges and/or at the intersections of the cuts, a cross-cut area significantly greater than 5%, but not significantly greater than 15% was affected;

3 means that the coating has been flaked along the edges of the cuts partly or wholly in large ribbons and/or it has been flaked partly or wholly on different parts of the squares, a cross-cut area greater than 15%, but not significantly greater than to 35% was affected;

4 means that the coating has been flaked along the edges of the cuts in large ribbons and/or some squares have been detached partly or wholly, a cross-cut area significantly greater than 35%, but not significantly greater than 65% was affected;

5 means that any degree of flaking that could not even be classified by classification 4.

Further, the cross-cut area was examined for any adhesion failure by means of light microscopy pictures in 50x magnification (microscope: ZEISS Axio Imager).

| example / comparative example | visual inspection | 50x magnification |
|---|---|---|
| comparative example 2 | 2 | 2 |
| example 1 | better than 0, not even lattice pattern visible | 0 |
| example 2 | better than 0, not even lattice pattern visible | 0 |
| example 3 | better than 0, not even lattice pattern visible | 0 |
| example 4 | better than 0, not even lattice pattern visible | 0 |

II.3 Determination of scratch resistance / Diamond scratch test

The scratch resistance of the surface of the coated lens comprising the anti-reflective coating was determined by means of the TABER Shear / Scratch Tester with Diamond Scratch tool (Model 139-58). The threshold value given below is visible by the naked eye when the given weight has been applied to the surface comprising the anti-reflective coating of the respective coated lens. The minimum weight at which conchoidal fracture has been observed in 5x magnification (microscope: ZEISS Axio Imager) is given below as well.

| | Threshold value [g] | Conchoidal fracture [g] |
|---|---|---|
| comparative example 3 | 100 | >200 |
| comparative example 1 | 20 | 200 |
| comparative example 2 | 5,0 | 100 |
| example 5 | 4,0 | >200 |
| example 1 | 2,0 | >200 |
| comparative example 4 (10 coated lenses) | 1,7 (average) | 178 (average) |
| comparative example 5 | 4,0 | 150 |
| comparative example 6 | 3,0 | 100 |

II.4 Determination of the scratch and impact resistance / Bayer ratio

For the determination of the scratch resistance of the coating of the coated lenses according to the examples and comparative examples, the Bayer ratio was determined according to the COLTS operating procedure. A small pan loaded with a coated lens according to the examples or comparative examples as well as loaded with an uncoated diethylene glycol bisallylcarbonate spectacle lens (CR-39 lens) is shaken back and forth a distance of 4 inches, at 150 cycles per minute for 4 minutes. Holes that have been placed across the center section of the pan allow the spectacle lenses to protrude up through the center of each hole, resulting in abrasion in the presence of Kryptonite B as abrasion media. The coated lens according to the examples or comparative examples and the CR-39 lens had a hazemeter measurement completed prior to abrasion and another following abrasion. The resulting haze gain of the coated lens according to the examples and comparative examples is divided into the resulting haze of the CR-39 lens to establish a ratio of how many more times abrasion resistant the spectacle lens according to the examples or comparative examples is compared to the CR-39 lens. The Bayer ratio R is defined as $R = \frac{D_{std}}{D_{test}}$, with $D_{std}$ being the final % haze value of the CR-39 lens minus the initial % haze value of the CR-39 lens and $D_{test}$ being the final % haze value of the coated lens according to the examples or comparative examples minus the initial % haze value of the coated lens according to the examples and comparative examples. The haze-gard plus, company BYK-Gardner GmbH, was used for haze measurement.

The higher the Bayer ratio of a coating, the more scratch resistant is the coating. A coating having a Bayer ratio of 1 means that the coating has the same scratch resistance as the CR-39 lens.

| example / comparative example | Bayer-Ratio |
| --- | --- |
| comparative example 7 | 8,7 |
| comparative example 3 | 12,6 |
| comparative example 8 | 3,1 |
| comparative example 9 | 5,5 |
| comparative example 10 | 7,1 |
| comparative example 11 | 7,8 |
| example 1 | 18,1 |
| example 2 | 17,2 |
| example 3 | 17,6 |
| example 4 | 17,0 |
| example 5 | 17,0 |
| example 6 | 21,7 |
| example 7 | 23,2 |

II.5 Determination of intrinsic stress

To measure the intrinsic stress of the anti-reflective coatings according to the examples, an interferometer with a wavelength of 633 nm was used:

The curvature of a flat glass was measured before the application of the anti-reflective coating according to the examples to measure the intrinsic or reference curvature of the flat glass R0. Then, the anti-reflective coating according to the examples was applied to this flat glass and curvature R thereof was measured. Using the Stoney-Equation, the intrinsic stress $\sigma$ was calculated.

Example 1: $\sigma$ = -61 MPa (compressive stress).

Claims

1. Coated lens comprising at least one lens substrate and at least one coating, **characterized in that** the lens substrate comprises

(i) at least two optical materials, the at least two optical materials being selected from the group consisting of at least one thermosetting hard resin, at least one thermoplastic hard resin, at least one photochromic material and at least one glass, the at least two different optical materials comprise at least one optical material comprising at least one glass, or
(ii) a single optical material, the single optical material being at least one glass,

and the coating comprises at least one anti-reflective coating comprising a lower part and an upper part, the lower part being next to a surface of the lens substrate, the lower part comprising an alternating layer sequence of $[L, M]_n$,

with L having a wavelength dependent refractive index ranging from 1.473 at 380 nm to 1.456 at 780 nm, M having a wavelength dependent refractive index ranging from 1.632 at 380 nm to 1.599 at 780 nm or M having a wavelength dependent refractive index ranging from 1.750 at 380 nm to 1.701 at 780 nm, n being $\geq 1$, and the upper part comprising a layer sequence $[H, M, L]_m$, with H having a wavelength dependent refractive index ranging from 2.832 at 380 nm to 2.270 at 780 nm, M having a wavelength dependent refractive index ranging from 1.632 at 380 nm to 1.599 at 780 nm or M having a wavelength dependent refractive index ranging from 1.750 at 380 nm to 1.701 at 780 nm, L having a wavelength dependent refractive index ranging from 1.473 at 380 nm to 1.456 at 780 nm and m being $\geq 1$, the anti-reflective coating comprising at least, beginning from the surface to be coated, $0.19459 \cdot \lambda_0/4 \cdot L$ to $0.23394 \cdot \lambda_0/4 \cdot L$; $0.48912 \cdot \lambda_0/4 \cdot M$ to $0.77248 \cdot \lambda_0/4 \cdot M$; $0.32489 \cdot \lambda_0/4 \cdot L$ to $0.61648 \cdot \lambda_0/4 \cdot L$; $0.36292 \cdot \lambda_0/4 \cdot M$ to $0.54573 \cdot \lambda_0/4 \cdot M$; $0.48976 \cdot \lambda_0/4 \cdot L$ to $0.80061 \cdot \lambda_0/4 \cdot L$; $0.59960 \cdot \lambda_0/4 \cdot M$ to $0.83505 \cdot \lambda_0/4 \cdot M$; $0.10179 \cdot \lambda_0/4 \cdot H$ to $0.23052 \cdot \lambda_0/4 \cdot H$; $0.50401 \cdot \lambda_0/4 \cdot M$ to $0.70778 \cdot \lambda_0/4 \cdot M$; $0.30008 \cdot \lambda_0/4 \cdot H$ to $0.48019 \cdot \lambda_0/4 \cdot H$; $0.99344 \cdot \lambda_0/4 \cdot L$ to $1.35331 \cdot \lambda_0/4 \cdot L$, with $\lambda_0$ being in the range of 500 nm and 600 nm, M having a wavelength dependent refractive index of 1.614 at 500 nm to 1.606 at 600 nm or M having a wavelength dependent refractive index of 1.724 at 500 nm to 1.712 at 600 nm, L having a wavelength dependent refractive index of 1.462 at 500 nm and 1.459 at 600 nm and H having a wavelength dependent refractive index of 2.440 at 500 nm and 2.336 at 600 nm.

2. Coated lens according to claim 1, **characterized in that** the lens substrate comprising the at least two optical materials comprises at least one thin glass having a thickness of 90 $\mu$m to 220 $\mu$m.

3. Coated lens according to any one of the preceding claims 1 to 2, **characterized in that** the lens substrate comprising the at least two optical materials is selected from a lens substrate comprising

   i) at least one optical material a. comprising at least one glass, the at least one optical material a. forming the front surface of the lens substrate and at least one optical material b. selected from the group consisting of at least one thermosetting hard resin and at least one thermoplastic hard resin, the at least one optical material b. forming the back surface thereof, or
   ii) at least one optical material b. selected from the group consisting of at least one thermosetting hard resin and at least one thermoplastic hard resin, the at least one optical material b. forming the front surface of the lens substrate and at least one optical material a. comprising at least one glass, the at least one optical material a. forming the back surface thereof, or
   iii) at least one optical material a. comprising a glass, the at least one optical material a. forming the front surface of the lens substrate, at least one optical material b. selected from the group consisting of at least one thermosetting hard resin and at least one thermoplastic hard resin, the at least one optical material b. forming at least one intermediate layer of the lens substrate and at least one optical material a.' comprising a glass, the at least one optical material a.' forming the back surface thereof, or
   iv) at least one optical material b. selected from the group consisting of at least one thermosetting hard resin and at least one thermoplastic hard resin, the at least one optical material b. forming the front surface of the lens substrate, at least one optical material a. comprising at least one glass forming at least one intermediate layer of the lens substrate and at least one optical material b.' selected from the group consisting of at least one thermosetting hard resin and at least one thermoplastic hard resin, the at least one optical material b.' forming the back surface thereof.

4. Coated lens according to any one of the preceding claims 1 to 3, **characterized in that** a ratio of the sum of the layer thicknesses of the layers H und M, t(H+M), to the sum of the layer thicknesses of the at least one layer L, t(L), of the at least one anti-reflective coating is in a range of t(H+M) / t(L) > 0.6 to < 2.0.

5. Coated lens according to any one of the preceding claims, **characterized in that**

   - the layer M comprises or consists of $Al_xO_y$, wherein x is 1.5 to 2.5 and y is 2.5 to 3.5, or comprises or consists of $Pr_eO_f$, wherein e is 1.0 to 6 and f is 2.0 to 11, or the layer M comprises or consists of a mixture of $Al_xO_y$ and $Pr_eO_f$ or a mixed oxide of Al and Pr,
   - the layer L comprises or consists of $SiO_z$, wherein z is 1.5 to 2.5,
   - the layer H comprises or consists of $Ti_aO_b$, wherein a is 0.5 to 1.5, and b is 1.5 to 2.5, or comprises or consists of $Nb_cO_d$, wherein c is 1.5 to 2.5, and d is 4.5 to 5.5.

6. Coated lens according to any one of the preceding claims, **characterized in that** the anti-reflective coating comprising at least, beginning from the surface of the lens substrate comprising a glass, $0.19459 \cdot \lambda_0/4 \cdot L$ to $0.23394 \cdot \lambda_0/4 \cdot L$; $0.60931 \cdot \lambda_0/4 \cdot M$ to $0.73457 \cdot \lambda_0/4 \cdot M$; $0.51278 \cdot \lambda_0/4 \cdot L$ to $0.61648 \cdot \lambda_0/4 \cdot L$; $0.45267 \cdot \lambda_0/4 \cdot M$ to $0.54573 \cdot \lambda_0/4 \cdot M$;

$0.48976 \cdot \lambda_0/4 \cdot L$ to $0.58880 \cdot \lambda_0/4 \cdot L$; $0.64177 \cdot \lambda_0/4 \cdot M$ to $0.77369 \cdot \lambda_0/4 \cdot M$; $0.18388 \cdot \lambda_0/4 \cdot H$ to $0.23052 \cdot \lambda_0/4 \cdot H$; $0.50401 \cdot \lambda_0/4 \cdot M$ to $0.60762 \cdot \lambda_0/4 \cdot M$; $0.31035 \cdot \lambda_0/4 \cdot H$ to $0.38910 \cdot \lambda_0/4 \cdot H$; $1.03965 \cdot \lambda_0/4 \cdot L$ to $1.25011 \cdot \lambda_0/4 \cdot L$.

7. Coated lens according to any one of the preceding claims 1 to 5, **characterized in that** the anti-reflective coating comprising at least, beginning from the surface of the lens substrate comprising a glass, $0.19459 \cdot \lambda_0/4 \cdot L$ to $0.23394 \cdot \lambda_0/4 \cdot L$; $0.48913 \cdot \lambda_0/4 \cdot M$ to $0.58967 \cdot \lambda_0/4 \cdot M$; $0.44872 \cdot \lambda_0/4 \cdot L$ to $0.53946 \cdot \lambda_0/4 \cdot L$; $0.37536 \cdot \lambda_0/4 \cdot M$ to $0.45251 \cdot \lambda_0/4 \cdot M$; $0.66595 \cdot \lambda_0/4 \cdot L$ to $0.80061 \cdot \lambda_0/4 \cdot L$; $0.59956 \cdot \lambda_0/4 \cdot M$ to $0.72281 \cdot \lambda_0/4 \cdot M$; $0.17148 \cdot \lambda_0/4 \cdot H$ to $0.21497 \cdot \lambda_0/4 \cdot H$; $0.51636 \cdot \lambda_0/4 \cdot M$ to $0.62251 \cdot \lambda_0/4 \cdot M$; $0.30008 \cdot \lambda_0/4 \cdot H$ to $0.37619 \cdot \lambda_0/4 \cdot H$; $0.99344 \cdot \lambda_0/4 \cdot L$ to $1.19455 \cdot \lambda_0/4 \cdot L$.

8. Coated lens according to any one of the preceding claims 1 to 5, **characterized in that** the anti-reflective coating comprising at least, beginning from the surface of the lens substrate comprising a glass, $0.19459 \cdot \lambda_0/4 \cdot L$ to $0.23394 \cdot \lambda_0/4 \cdot L$; $0.64076 \cdot \lambda_0/4 \cdot M$ to $0.77248 \cdot \lambda_0/4 \cdot M$; $0.32489 \cdot \lambda_0/4 \cdot L$ to $0.39059 \cdot \lambda_0/4 \cdot L$; $0.36292 \cdot \lambda_0/4 \cdot M$ to $0.43753 \cdot \lambda_0/4 \cdot M$; $0.53342 \cdot \lambda_0/4 \cdot L$ to $0.641290 \cdot \lambda_0/4 \cdot L$; $0.69267 \cdot \lambda_0/4 \cdot M$ to $0.83505 \cdot \lambda_0/4 \cdot M$; $0.10179 \cdot \lambda_0/4 \cdot H$ to $0.12761 \cdot \lambda_0/4 \cdot H$; $0.58710 \cdot \lambda_0/4 \cdot M$ to $0.70778 \cdot \lambda_0/4 \cdot M$; $0.38304 \cdot \lambda_0/4 \cdot H$ to $0.48019 \cdot \lambda_0/4 \cdot H$; $1.12548 \cdot \lambda_0/4 \cdot L$ to $1.35332 \cdot \lambda_0/4 \cdot L$.

9. Method for manufacturing a coated lens comprising a lens substrate and at least one coating, **characterized in that** the lens substrate comprises at least two different optical material selected from the group consisting of at least one thermosetting hard resin, at least one thermoplastic hard resin, at least one photochromic material and at least one glass, the at least two different optical materials comprise at least one optical material comprising at least one glass, the at least two different optical materials are assembled before the at least one coating is applied to at least one surface of the lens substrate and the at least one coating comprises an anti-reflective coating comprising a lower part and an upper part, the lower part being next to a surface of the lens substrate, the lower part comprising an alternating layer sequence of $[L, M]_n$, with L having a wavelength dependent refractive index ranging from 1.473 at 380 nm to 1.456 at 780 nm, M having a wavelength dependent refractive index ranging from 1.632 at 380 nm to 1.599 at 780 nm or M having a wavelength dependent refractive index ranging from 1.750 at 380 nm to 1.701 at 780 nm, n being $\geq 1$, and the upper part comprising a layer sequence $[H, M, L]_m$, with H having a wavelength dependent refractive index ranging from 2.832 at 380 nm to 2.270 at 780 nm, M having a wavelength dependent refractive index ranging from 1.632 at 380 nm to 1.599 at 780 nm or M having a wavelength dependent refractive index ranging from 1.750 at 380 nm to 1.701 at 780 nm, L having a wavelength dependent refractive index ranging from 1.473 at 380 nm to 1.456 at 780 nm and m being $\geq 1$, the anti-reflective coating comprising at least, beginning from the surface to be coated, $0.19459 \cdot \lambda_0/4 \cdot L$ to $0.23394 \cdot \lambda_0/4 \cdot L$; $0.48912 \cdot \lambda_0/4 \cdot M$ to $0.77248 \cdot \lambda_0/4 \cdot M$; $0.32489 \cdot \lambda_0/4 \cdot L$ to $0.61648 \cdot \lambda_0/4 \cdot L$; $0.36292 \cdot \lambda_0/4 \cdot M$ to $0.54573 \cdot \lambda_0/4 \cdot M$; $0.48976 \cdot \lambda_0/4 \cdot L$ to $0.80061 \cdot \lambda_0/4 \cdot L$; $0.59960 \cdot \lambda_0/4 \cdot M$ to $0.83505 \cdot \lambda_0/4 \cdot M$; $0.10179 \cdot \lambda_0/4 \cdot H$ to $0.23052 \cdot \lambda_0/4 \cdot H$; $0.50401 \cdot \lambda_0/4 \cdot M$ to $0.70778 \cdot \lambda_0/4 \cdot M$; $0.30008 \cdot \lambda_0/4 \cdot H$ to $0.48019 \cdot \lambda_0/4 \cdot H$; $0.99344 \cdot \lambda_0/4 \cdot L$ to $1.35331 \cdot \lambda_0/4 \cdot L$, with $\lambda_0$ being in the range of 500 nm and 600 nm, M having a wavelength dependent refractive index of 1.614 at 500 nm to 1.606 at 600 nm or M having a wavelength dependent refractive index of 1.724 at 500 nm to 1.712 at 600 nm, L having a wavelength dependent refractive index of 1.462 at 500 nm and 1.459 at 600 nm and H having a wavelength dependent refractive index of 2.440 at 500 nm and 2.336 at 600 nm.

10. Method according to claim 9, **characterized in that** the at least one glass comprises at least one thin glass having a thickness of 95 $\mu$m to 215 $\mu$m.

11. Method according to any one of the preceding claims 9 to 10, **characterized in that** the lens substrate is selected from any one of

   i) at least one optical material a. comprising at least one glass, the at least one optical material a. forming the front surface of the lens substrate and at least one optical material b. selected from the group consisting of at least one thermosetting hard resin and at least one thermoplastic hard resin, the at least one optical material b. forming the back surface thereof, or
   ii) at least one optical material b. selected from the group consisting of at least one thermosetting hard resin and at least one thermoplastic hard resin, the at least one optical material b. forming the front surface of the lens substrate and at least one optical material a. comprising at least one glass, the at least one optical material a. forming the back surface thereof, or
   iii) at least one optical material a. comprising a glass, the at least one optical material a. forming the front surface of the lens substrate, at least one optical material b. selected from the group consisting of at least one thermosetting hard resin and at least one thermoplastic hard resin, the at least one optical material b. forming at least one intermediate layer of the lens substrate and at least one optical material a.' comprising a glass, the at least one optical material a.' forming the back surface thereof, or

iv) at least one optical material b. selected from the group consisting of at least one thermosetting hard resin and at least one thermoplastic hard resin, the at least one optical material b. forming the front surface of the lens substrate, at least one optical material a. comprising at least one glass forming at least one intermediate layer of the lens substrate and at least one optical material b.' selected from the group consisting of at least one thermosetting hard resin and at least one thermoplastic hard resin, the at least one optical material b.' forming the back surface thereof.

12. Method according to any one of the preceding claims 9 to 11, **characterized in that** a ratio of the sum of the layer thicknesses of the layers H und M, t(H+M), to the sum of the layer thicknesses of the at least one layer L, t(L), of the at least one anti-reflective coating is in a range of t(H+M) / t(L) > 0.6 to < 2.0.

13. Coated lens according to any one of the preceding claims 1 to 8, **characterized in that** the coated lens is in the form of computer-readable instructions for the production thereof stored on a computer-readable data carrier.

14. Coated lens according to any one of the preceding claims 1 to 8, **characterized in that** the coated lens is in the form of computer-readable instructions for the production thereof transformed into a data carrier signal.

**Patentansprüche**

1. Beschichtete Linse, aufweisend zumindest ein Linsensubstrat und zumindest eine Beschichtung, **dadurch gekennzeichnet, dass** das Linsensubstrat aufweist:

(i) zumindest zwei optische Materialien, wobei die zumindest zwei optischen Materialien ausgewählt sind aus der Gruppe bestehend aus zumindest einem duroplastischen Hartharz, zumindest einem thermoplastischen Hartharz, zumindest einem photochromen Material und zumindest einem Glas, wobei die zumindest zwei unterschiedlichen optischen Materialien zumindest ein optisches Material aufweisen, das zumindest ein Glas aufweist, oder

(ii) ein einziges optisches Material, wobei das einzige optische Material zumindest ein Glas ist,

und die Beschichtung zumindest eine Antireflexionsbeschichtung aufweist, die ein Unterteil und ein Oberteil aufweist, wobei das Unterteil sich neben einer Oberfläche des Linsensubstrats befindet, das Unterteil eine alternierende Schichtfolge aus **[L, M]$_n$ auf-weist,** wobei **L** einen wellenlängenabhängigen Brechungsindex im Bereich von 1,473 bei 380 nm bis 1,456 bis 780 nm hat, M einen wellenlängenabhängigen Brechungsindex im Bereich von 1,632 bei 380 nm bis 1,599 bei 780 nm hat, oder M einen wellenlängenabhängigen Brechungsindex im Bereich von 1,750 bei 380 nm bis 1,701 bei 780 nm hat, wobei n $\geq$ 1, und das Oberteil eine Schichtfolge **[H, M, L]m aufweist, wobei H** einen wellenlängenabhängigen Brechungsindex im Bereich von 2,832 bei 380 nm bis 2,270 bei 780 nm hat, **M** einen wellenlängenabhängigen Brechungsindex im Bereich von 1,632 bei 380 nm bis 1,599 bei 780 nm hat, oder **M** einen wellenlängenabhängigen Brechungsindex im Bereich von 1,750 bei 380 nm bis 1,701 bei 780 nm hat, L einen wellenlängenabhängigen Brechungsindex im Bereich von 1,473 bei 380 nm bis 1,456 bei 780 nm hat, und m $\geq$ 1 ist, wobei die Antireflexionsbeschichtung zumindest, beginnend bei der zu beschichtenden Oberfläche, $0,19459 \cdot \lambda_0/4 \cdot L$ bis $0,23394 \cdot \lambda_0/4 \cdot M$; $0,48912 \cdot \lambda_0/4 \cdot M$ bis $0,77248 \cdot \lambda_0/4 \cdot M$; $0,32489 \cdot \lambda_0/4 \cdot L$ bis $0,61648 \cdot \lambda_0/4 \cdot L$; $0,36292 \cdot \lambda_0/4 \cdot M$ bis $0,54573 \cdot \lambda_0/4 \cdot M$; $0,48976 \cdot \lambda_0/4 \cdot L$ bis $0,80061 \cdot \lambda_0/4 \cdot L$; $0,59960 \cdot \lambda_0/4 \cdot M$ bis $0,83505 \cdot \lambda_0/4 \cdot M$; $0,10179 \cdot \lambda_0/4 \cdot H$ bis $0,23052 \cdot \lambda_0/4 \cdot H$; $0,50401 \cdot \lambda_0/4 \cdot M$ bis $0,70778 \cdot \lambda_0/4 \cdot M$; $0,30008 \cdot \lambda_0/4 \cdot H$ bis $0,48019 \cdot \lambda_0/4 \cdot H$; $0,99344 \cdot \lambda_0/4 \cdot L$ bis $1,35331 \cdot \lambda_0/4 \cdot L$ aufweist, wobei $\lambda_0$ im Bereich von 500 nm und 600 nm ist, M einen wellenlängenabhängigen Brechungsindex von 1,614 bei 500 nm bis 1,606 bei 600 nm hat, oder M einen wellenlängenabhängigen Brechungsindex von 1,724 bei 500 nm bis 1,712 bei 600 nm hat, L einen wellenlängenabhängigen Brechungsindex von 1,462 bei 500 nm und 1,459 bei 600 nm hat, und H einen wellenlängenabhängigen Brechungsindex von 2,440 bei 500 nm und 2,336 bei 600 nm hat.

2. Beschichtete Linse nach Anspruch 1, **dadurch gekennzeichnet, dass** das Linsensubstrat, das die zumindest zwei optischen Materialien aufweist, zumindest ein dünnes Glas mit einer Dicke von 90 $\mu$m bis 220 $\mu$m aufweist.

3. Beschichtete Linse nach einem der vorhergehenden Ansprüche 1 bis 2, **dadurch gekennzeichnet, dass** das Linsensubstrat, das zumindest zwei optische Materialien aufweist, ausgewählt ist aus einem Linsensubstrat, welches aufweist:

i) zumindest ein optisches Material a., das zumindest ein Glas aufweist, wobei das zumindest eine optische Material a. die Vorderseite des Linsensubstrats bildet, und zumindest ein optisches Material b., das ausgewählt ist aus der Gruppe bestehend aus zumindest einem duroplastischen Hartharz und zumindest einem thermoplastischen Hartharz, wobei das zumindest eine optische Material b. die Rückseite davon bildet, oder

ii) zumindest ein optisches Material b., das ausgewählt ist aus der Gruppe bestehend aus zumindest einem duroplastischen Hartharz und zumindest einem thermoplastischen Hartharz, wobei das zumindest eine optische Material b. die Vorderseite des Linsensubstrats bildet, und zumindest ein optisches Material a., das zumindest ein Glas aufweist, wobei das zumindest eine optische Material a. die Rückseite davon bildet, oder

iii) zumindest ein optisches Material a., das ein Glas aufweist, wobei das zumindest eine optische Material a. die Vorderseite des Linsensubstrats bildet, zumindest ein optisches Material b., das ausgewählt ist aus der Gruppe bestehend aus zumindest einem duroplastischen Hartharz und zumindest einem thermoplastischen Hartharz, wobei das zumindest eine optische Material b. zumindest eine Zwischenschicht des Linsensubstrats bildet, und zumindest ein optisches Material a.', das ein Glas aufweist, wobei das zumindest eine optische Material a.' die Rückseite davon bildet, oder

iv) zumindest ein optisches Material b., das ausgewählt ist aus der Gruppe bestehend aus zumindest einem duroplastischen Hartharz und zumindest einem thermoplastischen Hartharz, wobei das zumindest eine optische Material b. die Vorderseite des Linsensubstrats bildet, zumindest ein optisches Material a., das zumindest ein Glas aufweist, das zumindest eine Zwischenschicht des Linsensubstrats bildet, und zumindest ein optisches Material b.', das ausgewählt aus der Gruppe bestehend aus zumindest einem duroplastischen Hartharz und zumindest einem thermoplastischen Hartharz, wobei das zumindest eine optische Material b.' die Rückseite davon bildet.

4. Beschichtete Linse nach einem der vorhergehenden Ansprüche 1 bis 3, **dadurch gekennzeichnet, dass** ein Verhältnis der Summe der Schichtdicken der Schichten H und M, t(H+M), zu der Summe der Schichtdicken der zumindest einen Schicht L, t(L), der zumindest einen Antireflexionsbeschichtung in einem Bereich von t(H+M) / t(L) > 0,6 bis < 2,0 liegt.

5. Beschichtete Linse nach einem der vorhergehenden Ansprüche, **dadurch gekennzeichnet, dass**

   - die Schicht M $Al_xO_y$ aufweist oder daraus besteht, wobei x 1,5 bis 2,5 ist und y 2,5 bis 3,5 ist, oder $Pr_eO_f$ aufweist oder daraus besteht, wobei e 1,0 bis 6 ist, und f 2,0 bis 11 ist, oder die Schicht M eine Mischung aus $Al_xO_y$ und $Pr_eO_f$ oder ein gemischtes Oxid von Al und Pr aufweist oder daraus besteht,
   - die Schicht L $SiO_z$ aufweist oder daraus besteht, wobei z 1,5 bis 2,5 ist,
   - die Schicht H $Ti_aO_b$ aufweist oder daraus besteht, wobei a 0,5 bis 1,5 ist und b 1,5 bis 2,5 ist, oder $Nb_cO_d$ aufweist oder daraus besteht, wobei c 1,5 bis 2,5 ist und d 4,5 bis 5,5 ist.

6. Beschichtete Linse nach einem der vorhergehenden Ansprüche, **dadurch gekennzeichnet, dass** die Antireflexionsbeschichtung zumindest, beginnend von der Oberfläche des Linsensubstrats, die ein Glas aufweist, $0,19459 \cdot \lambda_0/4 \cdot L$ bis $0,23394 \cdot \lambda_0/4 \cdot L$; $0,60931 \cdot \lambda_0/4 \cdot M$ bis $0,73457 \cdot \lambda_0/4 \cdot M$; $0,51278 \cdot \lambda_0/4 \cdot L$ bis $0,61648 \cdot \lambda_0/4 \cdot L$; $0,45267 \cdot \lambda_0/4 \cdot M$ bis $0,54573 \cdot \lambda_0/4 \cdot M$; $0,48976 \cdot \lambda_0/4 \cdot L$ bis $0,58880 \cdot \lambda_0/4 \cdot L$; $0,64177 \cdot \lambda_0/4 \cdot M$ bis $0,77369 \cdot \lambda_0/4 \cdot M$; $0,18388 \cdot \lambda_0/4 \cdot H$ bis $0,23052 \cdot \lambda_0/4 \cdot H$; $0,50401 \cdot \lambda_0/4 \cdot M$ bis $0,60762 \cdot \lambda_0/4 \cdot M$; $0,31035 \cdot \lambda_0/4 \cdot H$ bis $0,38910 \cdot \lambda_0/4 \cdot H$; $1,03965 \cdot \lambda_0/4 \cdot L$ bis $1,25011 \cdot \lambda_0/4 \cdot L$ aufweist.

7. Beschichtete Linse nach einem der vorhergehenden Ansprüche 1 bis 5, **dadurch gekennzeichnet, dass** die Antireflexionsbeschichtung zumindest, beginnend von der Oberfläche des Linsensubstrats, die ein Glas aufweist, folgendes aufweist:
   $0,19459 \cdot \lambda_0/4 \cdot L$ **bis** $0,23394 \cdot \lambda_0/4 \cdot L$; $0,48913 \cdot \lambda_0/4 \cdot M$ **bis** $0,58967 \cdot \lambda_0/4 \cdot M$; $0,44872 \cdot \lambda_0/4 \cdot L$ **bis** $0,53946 \cdot \lambda_0/4 \cdot L$; $0,37536 \cdot \lambda_0/4 \cdot M$ **bis** $0,45251 \cdot \lambda_0/4 \cdot M$; **$0,66595 \cdot \lambda_0/4 \cdot L$ bis** $0,80061 \cdot \lambda_0/4 \cdot L$; $0,59956 \cdot \lambda_0/4 \cdot M$ **bis** $0,72281 \cdot \lambda_0/4 \cdot M$; $0,17148 \cdot \lambda_0/4 \cdot H$ **bis** $0,21497 \cdot \lambda_0/4 \cdot H$; $0,51636 \cdot \lambda_0/4 \cdot M$ **bis** $0,62251 \cdot \lambda_0/4 \cdot M$; $0,30008 \cdot \lambda_0/4 \cdot H$ **bis** $0,37619 \cdot \lambda_0/4 \cdot H$; $0,99344 \cdot \lambda_0/4 \cdot L$ **bis** $1,19455 \cdot \lambda_0/4 \cdot$.

8. Beschichtete Linse nach einem der vorhergehenden Ansprüche 1 bis 5, **dadurch gekennzeichnet, dass** die Antireflexionsbeschichtung zumindest, beginnend von der Oberfläche des Linsensubstrats, die ein Glas aufweist, folgendes aufweist:
   $0,19459 \cdot \lambda_0/4 \cdot L$ **bis** $0,23394 \cdot \lambda_0/4 \cdot L$; $0,64076 \cdot \lambda_0/4 \cdot M$ **bis** $0,77248 \cdot \lambda_0/4 \cdot M$; $0,32489 \cdot \lambda_0/4 \cdot L$ **bis** $0,39059 \cdot \lambda_0/4 \cdot L$; $0,36292 \cdot \lambda_0/4 \cdot M$ **bis $0,43753 \cdot \lambda_0/4 \cdot M$; $0,53342 \cdot \lambda_0/4 \cdot L$** bis $0,641290 \cdot \lambda_0/4 \cdot L$; $0,69267 \cdot \lambda_0/4 \cdot M$ **bis** $0,83505 \cdot \lambda_0/4 \cdot M$; $0,10179 \cdot \lambda_0/4 \cdot H$ **bis** $0,12761 \cdot \lambda_0/4 \cdot H$; $0,58710 \cdot \lambda_0/4 \cdot M$ **bis** $0,70778 \cdot \lambda_0/4 \cdot M$; $0,38304 \cdot \lambda_0/4 \cdot H$ **bis** $0,48019 \cdot \lambda_0/4 \cdot H$; $1,12548 \cdot \lambda_0/4 \cdot L$ **bis** $1,35332 \cdot \lambda_0/4 \cdot L$.

9. Verfahren zur Fertigung einer beschichteten Linse, die ein Linsensubstrat und zumindest eine Beschichtung aufweist, **dadurch gekennzeichnet, dass** das Linsensubstrat zumindest zwei unterschiedliche optische Materialien ausgewählt aus der Gruppe bestehend aus zumindest einem duroplastischen Hartharz, zumindest einem thermoplastischen Hartharz, zumindest einem photochromen Material und zumindest einem Glas aufweist, wobei die zumindest zwei unterschiedlichen optischen Materialien zumindest ein optisches Material aufweisen, das zumindest ein Glas aufweist, wobei die zumindest zwei unterschiedlichen optischen Materialien montiert werden, bevor die zumindest eine Beschichtung auf zumindest eine Oberfläche des Linsensubstrats aufgebracht wird, und wobei die zumindest eine Beschichtung eine Antireflexionsbeschichtung aufweist, die ein Unterteil und ein Oberteil aufweist, wobei das Unterteil neben einer Oberfläche des Linsensubstrats ist, wobei das Unterteil eine alternierende Schichtfolge $[L, M]_n$ aufweist, wobei L einen wellenlängenabhängigen Brechungsindex im Bereich von 1,473 bei 380 nm bis 1,456 bei 780 nm hat, M einen wellenlängenabhängigen Brechungsindex im Bereich von 1,632 bei 380 nm bis 1,599 bei 780 nm hat, oder M einen wellenlängenabhängigen Brechungsindex im Bereich von 1,750 bei 380 nm bis 1,701 bei 780 nm hat, $n \geq 1$ ist, und das Oberteil eine Schichtfolge $[H, M, L]_m$ aufweist, wobei H einen wellenlängenabhängigen Brechungsindex im Bereich von 2,832 bei 380 nm bis 2,270 bei 780 nm hat, M einen wellenlängenabhängigen Brechungsindex von 1,632 bei 380 nm bis 1,599 bei 780 nm hat, oder M einen wellenlängenabhängigen Brechungsindex im Bereich von 1,750 bei 380 nm bis 1,701 bei 780 nm hat, L einen wellenlängenabhängigen Brechungsindex im Bereich von 1,473 bei 380 nm bis 1,456 bei 780 nm hat, und $m \geq 1$, wobei die Antireflexionsbeschichtung zumindest, beginnend von der zu beschichtenden Oberfläche, $0{,}19459 \cdot \lambda_0/4 \cdot L$ bis $0{,}23394 \cdot \lambda_0/4 \cdot L$; $0{,}48912 \cdot \lambda_0/4 \cdot M$ bis $0{,}77248 \cdot \lambda_0/4 \cdot M$; $0{,}32489 \cdot \lambda_0/4 \cdot L$ bis $0{,}61648 \cdot \lambda_0/4 \cdot L$; $0{,}36292 \cdot \lambda_0/4 \cdot M$ bis $0{,}54573 \cdot \lambda_0/4 \cdot M$; $0{,}48976 \cdot \lambda_0/4 \cdot L$ bis $0{,}80061 \cdot \lambda_0/4 \cdot L$; $0{,}59960 \cdot \lambda_0/4 \cdot M$ bis $0{,}83505 \cdot \lambda_0/4 \cdot M$; $0{,}10179 \cdot \lambda_0/4 \cdot H$ bis $0{,}23052 \cdot \lambda_0/4 \cdot H$; $0{,}50401 \cdot \lambda_0/4 \cdot M$ bis $0{,}70778 \cdot \lambda_0/4 \cdot M$; $0{,}30008 \cdot \lambda_0/4 \cdot H$ bis $0{,}48019 \cdot \lambda_0/4 \cdot H$; $0{,}99344 \cdot \lambda_0/4 \cdot L$ bis $1{,}35331 \cdot \lambda_0/4 \cdot L$ aufweist, wobei $\lambda_0$ im Bereich von 500 nm und 600 nm ist, M einen wellenlängenabhängigen Brechungsindex von 1,614 bei 500 nm bis 1,606 bei 600 nm hat, oder M einen wellenlängenabhängigen Brechungsindex von 1,724 bei 500 nm bis 1,712 bei 600 nm hat, L einen wellenlängenabhängigen Brechungsindex von 1,462 bei 500 nm und 1,459 bei 600 nm hat, und H einen wellenlängenabhängigen Brechungsindex von 2,440 bei 500 nm und 2,336 bei 600 nm hat.

10. Verfahren nach Anspruch 9, **dadurch gekennzeichnet, dass** das zumindest eine Glas zumindest ein dünnes Glas mit einer Dicke von 95 μm bis 215 μm aufweist.

11. Verfahren nach einem der vorhergehenden Ansprüche 9 bis 10, **dadurch gekennzeichnet, dass** das Linsensubstrat ausgewählt ist aus einem beliebigen von

i) zumindest einem optischen Material a., das zumindest ein Glas aufweist, wobei das zumindest eine optische Material a. die Vorderseite des Linsensubstrats bildet, und zumindest einem optischen Material b., das ausgewählt ist aus der Gruppe bestehend aus zumindest einem duroplastischen Hartharz und zumindest einem thermoplastischen Hartharz, wobei das zumindest eine optische Material b. die Rückseite davon bildet, oder
ii) zumindest einem optischen Material b., das ausgewählt ist aus der Gruppe bestehend aus zumindest einem duroplastischen Hartharz und zumindest einem thermoplastischen Hartharz, wobei das zumindest eine optische Material b. die Vorderseite des Linsensubstrats bildet, und zumindest einem optischen Material a., das zumindest ein Glas aufweist, wobei das zumindest eine optische Material a. die Rückseite davon bildet, oder
iii) zumindest einem optischen Material a., das ein Glas aufweist, wobei das zumindest eine optische Material a. die Vorderseite des Linsensubstrats bildet, zumindest einem optischen Material b., das ausgewählt ist aus der Gruppe bestehend aus zumindest einem duroplastischen Hartharz und zumindest einem thermoplastischen Hartharz, wobei das zumindest eine optische Material b. zumindest eine Zwischenschicht des Linsensubstrats bildet, und zumindest einem optischen Material a.', das ein Glas aufweist, wobei das zumindest eine optische Material a.' die Rückseite davon bildet, oder
iv) zumindest einem optischen Material b., das ausgewählt ist aus der Gruppe bestehend aus zumindest einem duroplastischen Hartharz und zumindest einem thermoplastischen Hartharz, wobei das zumindest eine optische Material b. die Vorderseite des Linsensubstrats bildet, zumindest einem optischen Material a., das zumindest ein Glas aufweist, das zumindest eine Zwischenschicht des Linsensubstrats bildet, und zumindest einem optischen Material b.', das ausgewählt ist aus der Gruppe bestehend aus zumindest einem duroplastischen Hartharz und zumindest einem thermoplastischen Hartharz, wobei das zumindest eine optische Material b.' die Rückseite davon bildet.

12. Verfahren nach einem der vorhergehenden Ansprüche 9 bis 11, **dadurch gekennzeichnet, dass** ein Verhältnis der Summe der Schichtdicken der Schichten H und M, t(H+M), zu der Summe der Schichtdicken der zumindest einen Schicht L, t(L), der zumindest einen Antireflexionsbeschichtung in einem Bereich von t(H+M) / t(L) > 0,6 bis < 2,0 liegt.

**13.** Beschichtete Linse nach einem der vorhergehenden Ansprüche 1 bis 8, **dadurch gekennzeichnet, dass** die beschichtete Linse in Form von computerlesbaren Anweisungen zu deren Produktion vorliegt, die auf einem computerlesbaren Datenträger gespeichert sind.

**14.** Beschichtete Linse nach einem der vorhergehenden Ansprüche 1 bis 8, **dadurch gekennzeichnet, dass** die beschichtete Linse in Form von computerlesbaren Anweisungen zu deren Produktion vorliegt, die in ein Datenträgersignal transformiert worden sind.

## Revendications

**1.** Lentille revêtue comprenant au moins un substrat de lentille et au moins un revêtement,
**caractérisée en ce que** le substrat de lentille comprend

(i) au moins deux matériaux optiques, les au moins deux matériaux optiques étant choisis dans le groupe constitué par au moins une résine dure thermodurcissable, au moins une résine dure thermoplastique, au moins un matériau photochromique et au moins un verre, les au moins deux matériaux optiques différents comprenant au moins un matériau optique comprenant au moins un verre, ou
(ii) un matériau optique unique, le matériau optique unique étant au moins un verre,

et le revêtement comprend au moins un revêtement antireflet comprenant une partie inférieure et une partie supérieure, la partie inférieure se trouvant à côté d'une surface du substrat de lentille, la partie inférieure comprenant une séquence de couches alternées de $[L, M]_n$, L ayant un indice de réfraction dépendant de la longueur d'onde dans la plage de 1,473 à 380 nm jusqu'à 1,456 à 780 nm, M ayant un indice de réfraction dépendant de la longueur d'onde dans la plage de 1,632 à 380 nm jusqu'à 1,599 à 780 nm ou M ayant un indice de réfraction dépendant de la longueur d'onde dans la plage de 1,750 à 380 nm jusqu'à 1,701 à 780 nm, n étant $\geq 1$, et la partie supérieure comprenant une séquence de couches $[H, M, L]_m$, H ayant un indice de réfraction dépendant de la longueur d'onde dans la plage de 2,832 à 380 nm jusqu'à 2,270 à 780 nm, M ayant un indice de réfraction dépendant de la longueur d'onde dans la plage de 1,632 à 380 nm jusqu'à 1,599 à 780 nm ou M ayant un indice de réfraction dépendant de la longueur d'onde dans la plage de 1,750 à 380 nm jusqu'à 1,701 à 780 nm, L ayant un indice de réfraction dépendant de la longueur d'onde dans la plage de 1,473 à 380 nm jusqu'à 1,456 à 780 nm et m étant $\geq 1$, le revêtement antireflet comprenant au moins, en commençant à partir de la surface à revêtir, $0{,}19459 \cdot \lambda_0/4 \cdot L$ à $0{,}23394 \cdot \lambda_0/4 \cdot L$; $0{,}48912 \cdot \lambda_0/4 \cdot M$ à $0{,}77248 \cdot \lambda_0/4 \cdot M$; $0{,}32489 \cdot \lambda_0/4 \cdot L$ à $0{,}61648 \cdot \lambda_0/4 \cdot L$; $0{,}36292 \cdot \lambda_0/4 \cdot M$ à $0{,}54573 \cdot \lambda_0/4 \cdot M$ ; $0{,}48976 \cdot \lambda_0/4 \cdot L$ ; à $0{,}80061 \cdot \lambda_0/4 \cdot L$ ; $0{,}59960 \cdot \lambda_0/4 \cdot M$ à $0{,}83505 \cdot \lambda_0/4 \cdot M$ ; $0{,}10179 \cdot \lambda_0/4 \cdot H$ à $0{,}23052 \cdot \lambda_0/4 \cdot H$; $0{,}50401 \cdot \lambda_0/4 \cdot M$ à $0{,}70778 \cdot \lambda_0/4 \cdot M$ ; $0{,}30008 \cdot \lambda_0/4 \cdot H$ à $0{,}48019 \cdot \lambda_0/4 \cdot H$ ; $0{,}99344 \cdot \lambda_0/4 \cdot L$ à $1{,}35331 \cdot \lambda_0/4 \cdot L$, $\lambda_0$ étant dans la plage entre 500 nm et 600 nm, M ayant un indice de réfraction dépendant de la longueur d'onde de 1,614 à 500 nm jusqu'à 1,606 à 600 nm ou M ayant un indice de réfraction dépendant de la longueur d'onde de 1,724 à 500 nm jusqu'à 1,712 à 600 nm, L ayant un indice de réfraction dépendant de la longueur d'onde de 1,462 à 500 nm et 1,459 à 600 nm et H ayant un indice de réfraction dépendant de la longueur d'onde de 2,440 à 500 nm et 2,336 à 600 nm.

**2.** Lentille revêtue selon la revendication 1, **caractérisée en ce que** le substrat de lentille comprenant les au moins deux matériaux optiques comprend au moins un verre mince ayant une épaisseur de 90 $\mu$m à 220 $\mu$m.

**3.** Lentille revêtue selon l'une quelconque des revendications 1 à 2 précédentes, **caractérisée en ce que** le substrat de lentille comprenant les au moins deux matériaux optiques est choisi parmi un substrat de lentille comprenant

i) au moins un matériau optique a. comprenant au moins un verre, l'au moins un matériau optique a. formant la surface avant du substrat de lentille et au moins un matériau optique b. choisi dans le groupe constitué par au moins une résine dure thermodurcissable et d'au moins une résine dure thermoplastique, l'au moins un matériau optique b. formant la surface arrière de celui-ci, ou
ii) au moins un matériau optique b. choisi dans le groupe constitué par au moins une résine dure thermodurcissable et d'au moins une résine dure thermoplastique, l'au moins un matériau optique b. formant la surface avant du substrat de la lentille et au moins un matériau optique a. comprenant au moins un verre, l'au moins un matériau optique a. formant la surface arrière de celui-ci, ou
iii) au moins un matériau optique a. comprenant un verre, l'au moins un matériau optique a. formant la surface avant du substrat de la lentille, au moins un matériau optique b. choisi dans le groupe constitué par au moins une résine dure thermodurcissable et d'au moins une résine dure thermoplastique, l'au moins un matériau optique b. formant au moins une couche intermédiaire du substrat de lentille et au moins un matériau optique a.' comprenant un verre, l'au moins un matériau optique a.' formant la surface arrière de celui-ci, ou

iv) au moins un matériau optique b. choisi dans le groupe constitué par au moins une résine dure thermodurcissable et au moins une résine dure thermoplastique, l'au moins un matériau optique b. formant la surface avant du substrat de lentille, au moins un matériau optique a. comprenant au moins un verre formant au moins une couche intermédiaire du substrat de lentille et au moins un matériau optique b.' choisi dans le groupe constitué par au moins une résine dure thermodurcissable et au moins une résine dure thermoplastique, l'au moins un matériau optique b.' formant la surface arrière de celui-ci.

4. Lentille revêtue selon l'une quelconque des revendications 1 à 3 précédentes, **caractérisée en ce qu'**un rapport de la somme des épaisseurs de couche des couches H et M, t (H+M), à la somme des épaisseurs de couche de l'au moins une couche L, t(L), de l'au moins un revêtement antireflet est dans la plage de t(H+M) / t (L) > 0, 6 jusqu'à < 2,0.

5. Lentille revêtue selon l'une quelconque des revendications précédentes, **caractérisée en ce que**

- la couche M comprend ou est constituée d'$Al_xO_y$, dans laquelle x est 1,5 à 2,5 et y est 2,5 à 3,5, ou comprend ou est constituée de $Pr_eO_f$, dans laquelle e est 1,0 à 6 et f est 2,0 à 11, ou la couche M comprend ou est constituée d'un mélange d'$Al_xO_y$ et de $Pr_eO_f$ ou d'un oxyde mixte d'Al et de Pr,
- la couche L comprend ou est constituée de $SiO_z$, dans laquelle z est 1,5 à 2,5,
- la couche H comprend ou est constituée de $Ti_aO_b$, dans laquelle a est 0,5 à 1,5, et b est 1,5 à 2,5, ou comprend ou est constituée de $Nb_cO_d$, dans laquelle c est 1,5 à 2,5, et d est 4,5 à 5,5.

6. Lentille revêtue selon l'une quelconque des revendications précédentes, **caractérisée en ce que** le revêtement antireflet comprend au moins, en commençant à partir de la surface du substrat de la lentille comprenant un verre, $0,19459 \cdot \lambda_0/4 \cdot L$ à $0,23394 \cdot \lambda_0/4 \cdot L$ ;
$0,60931 \cdot \lambda_0/4 \cdot M$ à $0,73457 \cdot \lambda_0/4 \cdot M$; $0,51278 \cdot \lambda_0/4 \cdot L$ à $0,61648 \cdot \lambda_0/4 \cdot L$; $0,45267 \cdot \lambda_0/4 \cdot M$ à $0,54573 \cdot \lambda_0/4 \cdot M$ ; $0,48976 \cdot \lambda_0/4 \cdot L$ à $0,58880 \cdot \lambda_0/4 \cdot L$; $0,64177 \cdot \lambda_0/4 \cdot M$ à $0,77369 \cdot \lambda_0/4 \cdot M$ ; $0,18388 \cdot \lambda_0/4 \cdot H$ à $0,23052 \cdot \lambda_0/4 \cdot H$; $0,50401 \cdot \lambda_0/4 \cdot M$ à $0,60762 \cdot \lambda_0/4 \cdot M$; $0,31035 \cdot \lambda_0/4 \cdot H$ à $0,38910 \cdot \lambda_0/4 \cdot H$; $1,03965 \cdot \lambda_0/4 \cdot L$ à $1,25011 \cdot \lambda_0/4 \cdot L$.

7. Lentille revêtue selon l'une quelconque des revendications 1 à 5 précédentes, **caractérisée en ce que** le revêtement antireflet comprend au moins, en commençant à partir de la surface du substrat de lentille comprenant un verre, $0,19459 \cdot \lambda_0/4 \cdot L$ à $0,23394 \cdot \lambda_0/4 \cdot L$; $0,48913 \cdot \lambda_0/4 \cdot M$ à $0,58967 \cdot \lambda_0/4 \cdot M$; $0,44872 \cdot \lambda_0/4 \cdot L$ à $0,53946 \cdot \lambda_0/4 \cdot L$; $0,37536 \cdot \lambda_0/4 \cdot M$ à $0,45251 \cdot \lambda_0/4 \cdot M$; $0,66595 \cdot \lambda_0/4 \cdot L$ à $0,80061 \cdot \lambda_0/4 \cdot L$; $0,59956 \cdot \lambda_0/4 \cdot M$ à $0,72281 \cdot \lambda_0/4 \cdot M$; $0,17148 \cdot \lambda_0/4 \cdot H$ à $0,21497 \cdot \lambda_0/4 \cdot H$; $0,51636 \cdot \lambda_0/4 \cdot M$ à $0,62251 \cdot \lambda_0/4 \cdot M$; $0,30008 \cdot \lambda_0/4 \cdot H$ à $0,37619 \cdot \lambda_0/4 \cdot H$; $0,99344 \cdot \lambda_0/4 \cdot L$ à $1,19455 \cdot \lambda_0/4 \cdot L$.

8. Lentille revêtue selon l'une quelconque des revendications 1 à 5 précédentes, **caractérisée en ce que** le revêtement antireflet comprend au moins, en commençant à partir de la surface du substrat de lentille comprenant un verre, $0,19459 \cdot \lambda_0/4 \cdot L$ à $0,23394 \cdot \lambda_0/4 \cdot L$; $0,64076 \cdot \lambda_0/4 \cdot M$ à $0,77248 \cdot \lambda_0/4 \cdot M$; $0,32489 \cdot \lambda_0/4 \cdot L$ à $0,39059 \cdot \lambda_0/4 \cdot L$; $0,36292 \cdot \lambda_0/4 \cdot M$ à $0,43753 \cdot \lambda_0/4 \cdot M$; $0,53342 \cdot \lambda_0/4 \cdot L$ à $0,641290 \cdot \lambda_0/4 \cdot L$; $0,69267 \cdot \lambda_0/4 \cdot M$ à $0,83505 \cdot \lambda_0/4 \cdot M$; $0,10179 \cdot \lambda_0/4 \cdot H$ à $0,12761 \cdot \lambda_0/4 \cdot H$; $0,58710 \cdot \lambda_0/4 \cdot M$ à $0,70778 \cdot \lambda_0/4 \cdot M$; $0,38304 \cdot \lambda_0/4 \cdot H$ à $0,48019 \cdot \lambda_0/4 \cdot H$; $1,12548 \cdot \lambda_0/4 \cdot L$ à $1,35332 \cdot \lambda_0/4 \cdot L$.

9. Procédé de fabrication d'une lentille revêtue comprenant un substrat de lentille et au moins un revêtement, **caractérisé en ce que** le substrat de lentille comprend au moins deux matériaux optiques différents choisis dans le groupe constitué par au moins une résine dure thermodurcissable, au moins une résine dure thermoplastique, au moins un matériau photochromique et au moins un verre, les au moins deux matériaux optiques différents comprennent au moins un matériau optique comprenant au moins un verre, les au moins deux matériaux optiques différents sont assemblés avant que l'au moins un revêtement ne soit appliqué sur au moins une surface du substrat de lentille et l'au moins un revêtement comprend un revêtement antireflet comprenant une partie inférieure et une partie supérieure, la partie inférieure étant située à côté d'une surface du substrat de lentille, la partie inférieure comprenant une séquence de couches alternées de [L, M]$_n$, L ayant un indice de réfraction dépendant de la longueur d'onde dans la plage de 1,473 à 380 nm jusqu'à 1,456 à 780 nm, M ayant un indice de réfraction dépendant de la longueur d'onde dans la plage de 1,632 à 380 nm jusqu'à 1,599 à 780 nm ou M ayant un indice de réfraction dépendant de la longueur d'onde dans la plage de 1,750 à 380 nm jusqu'à 1,701 à 780 nm, n étant ≥ 1, et la partie supérieure comprenant une séquence de couches [H, M, L]$_m$, H ayant un indice de réfraction dépendant de la longueur d'onde dans la plage de 2,832 à 380 nm jusqu'à 2,270 à 780 nm, M ayant un indice de réfraction dépendant de la longueur d'onde dans la plage de 1,632 à 380 nm jusqu'à 1,599 à 780 nm ou M ayant un indice de réfraction dépendant de la longueur d'onde dans la plage de 1,750 à 380 nm jusqu'à 1,701 à 780 nm, L ayant un indice de réfraction dépendant de la longueur d'onde dans la plage de 1,473 à 380 nm jusqu'à 1,456 à 780 nm et m étant $\geq$ 1, le revêtement antireflet comprenant au moins, en commençant à partir de la surface à revêtir, $0,19459 \cdot \lambda_0/4 \cdot L$ à $0,23394 \cdot \lambda_0/4 \cdot L$; $0,48912 \cdot \lambda_0/4 \cdot M$ à $0,77248 \cdot \lambda_0/4 \cdot M$; $0,32489 \cdot \lambda_0/4 \cdot L$ à $0,61648 \cdot \lambda_0/4 \cdot L$; $0,36292 \cdot \lambda_0/4 \cdot M$ à $0,54573 \cdot \lambda_0/4 \cdot M$; $0,48976 \cdot \lambda_0/4 \cdot L$ à $0,80061 \cdot \lambda_0/4 \cdot L$; $0,59960 \cdot \lambda_0/4 \cdot M$ à $0,83505 \cdot \lambda_0/4 \cdot M$; $0,10179 \cdot \lambda_0/4 \cdot H$ à $0,23052 \cdot \lambda_0/4 \cdot H$; $0,50401 \cdot \lambda_0/4 \cdot M$ à $0,70778 \cdot \lambda_0/4 \cdot M$; $0,30008 \cdot \lambda_0/4 \cdot H$ à $0,48019 \cdot \lambda_0/4 \cdot H$; $0,99344 \cdot \lambda_0/4 \cdot L$ à $1,35331 \cdot \lambda_0/4 \cdot L$, $\lambda_0$ étant dans la plage de 500 nm et 600 nm, M ayant un indice de réfraction dépendant de la longueur d'onde de 1,614 à 500 nm jusqu'à 1,606 à 600 nm ou M ayant un indice de réfraction dépendant de la longueur d'onde de 1,724 à 500 nm jusqu'à 1,712 à 600 nm, L ayant un indice de réfraction dépendant de la longueur d'onde de 1,462 à 500 nm et 1,459 à 600 nm et H ayant un indice de réfraction dépendant de la longueur d'onde de 2,440 à 500 nm et 2,336 à 600 nm.

**10.** Procédé selon la revendication 9, **caractérisé en ce que** l'au moins un verre comprend au moins un verre mince ayant une épaisseur de 95 $\mu$m à 215 $\mu$m.

**11.** Procédé selon l'une quelconque des revendications 9 à 10 précédentes, **caractérisé en ce que** le substrat de lentille est choisi parmi l'un quelconque des éléments suivants

    i) au moins un matériau optique a. comprenant au moins un verre, l'au moins un matériau optique a. formant la surface avant du substrat de lentille et au moins un matériau optique b. choisi dans le groupe constitué par au moins une résine dure thermodurcissable et au moins une résine dure thermoplastique, l'au moins un matériau optique b. formant la surface arrière de celui-ci, ou

    ii) au moins un matériau optique b. choisi dans le groupe constitué par au moins une résine dure thermodurcissable et au moins une résine dure thermoplastique, l'au moins un matériau optique b. formant la surface avant du substrat de lentille et au moins un matériau optique a. comprenant au moins un verre, l'au moins un matériau optique a. formant la surface arrière de celui-ci, ou

    iii) au moins un matériau optique a. comprenant un verre, l'au moins un matériau optique a. formant la surface avant du substrat de lentille, au moins un matériau optique b. choisi dans le groupe constitué par au moins une résine dure thermodurcissable et au moins une résine dure thermoplastique, l'au moins un matériau optique b. formant au moins une couche intermédiaire du substrat de lentille et au moins un matériau optique a.' comprenant un verre, l'au moins un matériau optique a.' formant la surface arrière de celui-ci, ou

    iv) au moins un matériau optique b. choisi dans le groupe constitué par au moins une résine dure thermodurcissable et au moins une résine dure thermoplastique, l'au moins un matériau optique b. formant la surface avant du substrat de lentille, au moins un matériau optique a. comprenant au moins un verre formant au moins une couche intermédiaire du substrat de lentille et au moins un matériau optique b.' choisi dans le groupe constitué par au moins une résine dure thermodurcissable et au moins une résine dure thermoplastique, l'au moins un matériau optique b.' formant la surface arrière de celui-ci.

**12.** Procédé selon l'une quelconque des revendications 9 à 11 précédentes, **caractérisé en ce qu'**un rapport de la somme des épaisseurs de couche des couches H et M, t(H+M), à la somme des épaisseurs de couche de l'au moins une couche L, t (L), de l'au moins un revêtement antireflet est dans la plage de t(H+M) / t(L) > 0,6 jusqu'à < 2,0.

**13.** Lentille revêtue selon l'une quelconque des revendications 1 à 8 précédentes, **caractérisée en ce que** la lentille revêtue se présente sous la forme d'instructions lisibles par ordinateur pour la fabrication de celle-ci, stockées sur un support de données lisible par ordinateur.

**14.** Lentille revêtue selon l'une quelconque des revendications 1 à 8 précédentes, **caractérisée en ce que** la lentille revêtue se présente sous la forme d'instructions lisibles par ordinateur pour la fabrication de celle-ci, transformées en un signal de support de données.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0182503 A2
- EP 3396439 A1
- EP 3474063 A1
- EP 3561581 A1
- EP 3561579 A1
- EP 3312662 A1
- EP 2437084 A1
- WO 2014202391 A1
- WO 2020190566 A1
- EP 1433814 A1
- EP 1602479 A1
- EP 1561571 A1
- WO 03058300 A1
- US 20050171231 A1
- US 20090189303 A1
- US 20020111390 A1
- EP 2578649 A1
- EP 2850484 A1
- EP 3395922 A1